# EUROPEAN PATENT SPECIFICATION

(11) **EP 4 451 847 B1**
(45) Date of publication and mention of the grant of the patent: **06.05.2026**
(21) Application number: 22839764.2
(22) Date of filing: 16.12.2022
(51) Int. Cl.: A01G 9/14, B65G 1/04, A01G 31/06, A01G 9/24

(54) **STORAGE SYSTEM FOR VERTICAL FARMING AND A METHOD THEREOF**
LAGERSYSTEM FÜR VERTIKALE LANDWIRTSCHAFT UND VERFAHREN DAFÜR
SYSTÈME DE STOCKAGE POUR L'AGRICULTURE VERTICALE ET SON PROCÉDÉ

(30) Priority: 21.12.2021 NO 20211565
(43) Date of publication of application: 30.10.2024
(73) Proprietor: AutoStore Technology AS, 5578 Nedre Vats (NO)
(72) Inventor: AUSTRHEIM, Trond, 5590 Etne (NO); FAGERLAND, Ingvar, 5541 KOLNES (NO)
(74) Representative: Kilburn & Strode LLP
(86) International application number: PCT/EP2022/086476
(87) International publication number: WO 2023/117801

(56) References cited:
- WO-A1-2021/198036
- US-A1- 2018 035 625
- US-A1- 2019 307 077

## Description

### FIELD OF THE INVENTION

The present invention relates to an illuminable storage grid for storing and cultivating crops, an automated storage and retrieval system for storing and retrieving crops from/to such a storage grid and a method thereof.

### BACKGROUND AND PRIOR ART

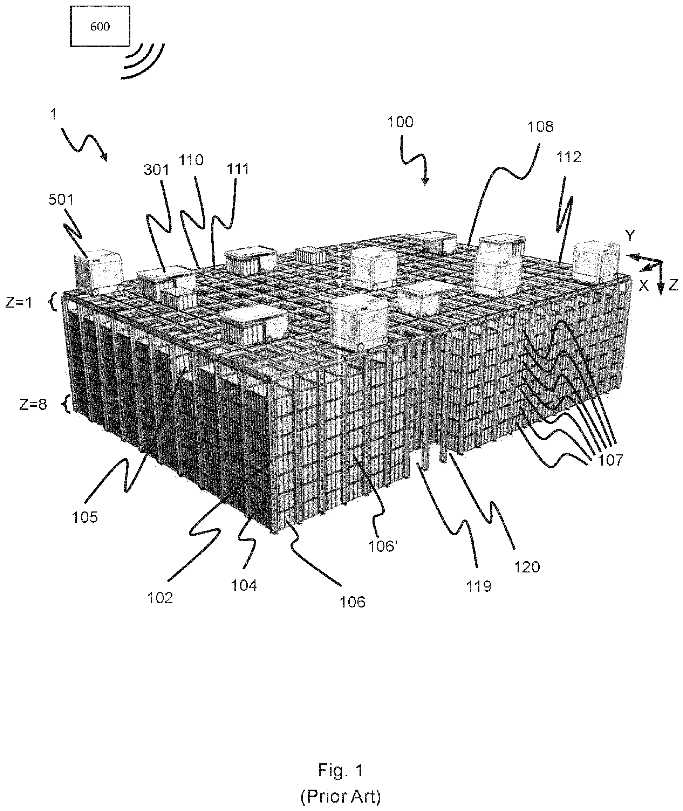

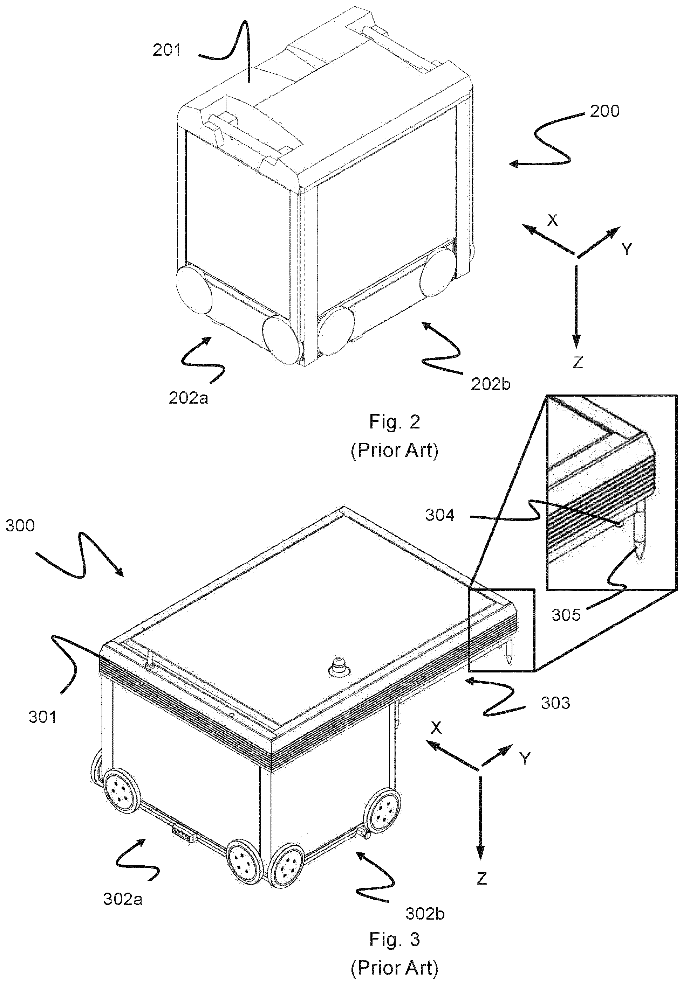

Fig. 1 discloses a prior art automated storage and retrieval system 1 with a framework structure 100 and Figs. 2, 3 and 4 disclose three different prior art container handling devices 200,300,400 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling devices 200,300,400 may be operated to raise bins 106 from, and lower bins 106 into, the storage columns 105, and also to transport the bins 106 above the storage columns 105. The rail system 108 comprises a first set of parallel rails 110 arranged to guide movement of the container handling devices 200,300,400 in a first direction X across the top of the frame structure 100, and a second set of parallel rails 111 arranged perpendicular to the first set of rails 110 to guide movement of the container handling devices 200,300,400 in a second direction *Y* which is perpendicular to the first direction *X.* Containers 106 stored in the columns 105 are accessed by the container handling devices 200,300,400 through access openings 115 in the rail system 108. The container handling devices 200,300,400 can move laterally above the storage columns 105, i.e. in a plane which is parallel to the horizontal X-Y plane.

The upright members 102 of the framework structure 100 may be used to guide the bins during raising of the bins out from and lowering of the bins into the columns 105. The stacks 107 of bins 106 are typically self-supporting.

Each prior art container handling device 200,300,400 comprises a handling device body / vehicle body 201,301,401 and first and second sets of wheels 202a,202b,302a,302b,402a,402b which enable the lateral movement of the container handling devices 200,300,400 in the *X* direction and in the *Y* direction, respectively. In Figs. 2, 3 and 4 two wheels in each set are fully visible. The first set of wheels 202a,302a,402a is arranged to engage with two adjacent rails of the first set 110 of rails, and the second set of wheels 202b,302b,402b is arranged to engage with two adjacent rails of the second set 111 of rails. At least one of the sets of wheels 202a, 202b, 302a,302b,402a,402b can be lifted and lowered, so that the first set of wheels 202a,302a,402a and/or the second set of wheels 202b,302b,402b can be engaged with the respective set of rails 110, 111 at any one time.

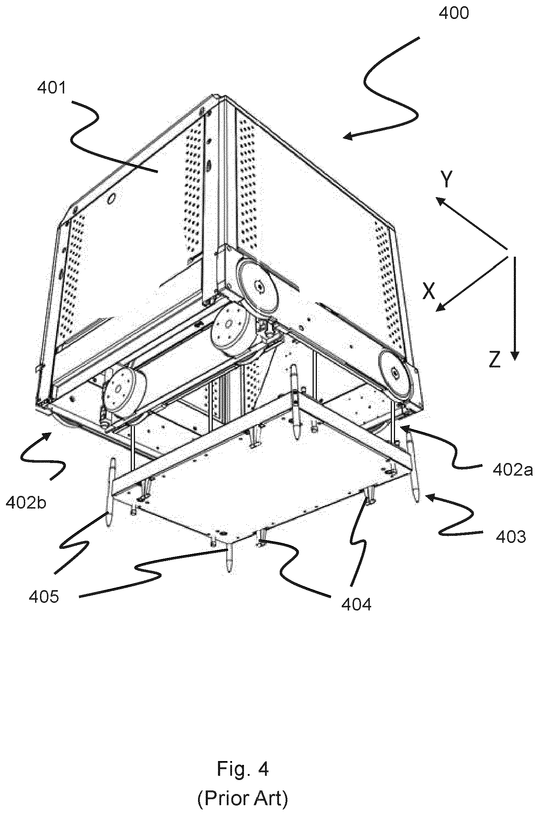

Each prior art container handling device 200,300,400 also comprises a lifting device 303,403 for vertical transportation of bins 106, e.g. raising a bin 106 from, and lowering a bin 106 into, a storage column 105. The lifting device 303,403 comprises one or more gripping / engaging devices 404 which are adapted to engage a bin 106, and which gripping / engaging devices 404 can be lowered from the vehicle 200,300,400 so that the position of the gripping / engaging devices 404 with respect to the vehicle 200,300,400 can be adjusted in a third direction Z which is orthogonal the first direction *X* and the second direction *Y.* The gripping device 404 of the container handling device / vehicle 400 in form of a plurality of claws is shown in Fig. 4. The lifting device of the container handling device 200 is located within the vehicle body 201 and is thus not shown.

Conventionally, and also for the purpose of this application, Z=1 identifies the uppermost layer available for bins below the rails 110,111, i.e. the layer immediately below the rail system 108, Z=2 the second layer below the rail system 108, Z=3 the third layer etc. In the exemplary prior art disclosed in Fig. 1, Z=8 identifies the lowermost, bottom layer of bins. Similarly, *X=1...n* and *Y*=1...*n* identifies the position of each storage column 105 in the horizontal plane. Consequently, as an example, and using the Cartesian coordinate system *X, Y, Z* indicated in Fig. 1, the bins identified as 106' in Fig. 1 can be said to occupy storage position *X*=17, *Y*=1, Z=6. The container handling devices 200,300,400 can be said to travel in layer Z=0, and each storage column 105 can be identified by its *X* and *Y* coordinates. Thus, the bins shown in Fig. 1 extending above the rail system 108 are also said to be arranged in layer Z=0.

The storage volume of the framework structure 100 has often been referred to as a grid, where the possible storage positions within this grid are referred to as storage cells. Each storage column may be identified by a position in an *X-* and *Y*-direction, while each storage cell may be identified by a container number in the *X-, Y-* and Z-di recti on

Each prior art container handling device 200,300,400 comprises a storage compartment or space for receiving and stowing a bin 106 when transporting the bin 106 across the rail system 108. The storage space may comprise a cavity arranged internally within the vehicle body 201,301,401 as present in Figs. 2 and 4 and as described in e.g. WO2015/193278A1 and WO2019/206487A1. Fig. 3 shows an alternative configuration of a container handling device / vehicle 300 with a cantilever construction. Such a vehicle is described in detail in e.g. NO317366.

The central cavity type vehicle 200 shown in Fig. 2 may have a footprint that covers an area with dimensions in the X and Y directions which is generally equal to the lateral extent of a storage column 105, e.g. as is described in WO2015/193278A1.

The term 'lateral' used herein may mean 'horizontal'.

Alternatively, the cavity container handling devices / vehicle 400 may have a footprint which is larger than the lateral area defined by a storage column 105 as shown in Figs. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a *Y* direction) may comprise two tracks. Each rail 110,111 may also comprise two track members that are fastened together, each track member providing one of a pair of tracks provided by each rail.

WO2018/146304A1 illustrates a typical configuration of rail system 108 comprising rails and parallel tracks in both *X and Y* directions.

In the framework structure 100, a majority of the columns 105 are storage columns 105, i.e. columns 105 where bins 106 are stored in stacks 107. However, some columns 105 may have other purposes. In Fig. 1, columns 119 and 120 are such special-purpose columns used by the container handling devices 200,300,400 to drop off and/or pick up bins 106 so that they can be transported to an access station (not shown) where the bins 106 can be accessed from outside of the framework structure 100 or transferred out of or into the framework structure 100 Within the art, such a location is normally referred to as a 'port' and the column in which the port is located may be referred to as a 'port column' 119,120. The transportation to the access station may be in any direction, that is horizontal, tilted and/or vertical. For example, the bins 106 may be placed in a random or dedicated column 105 within the framework structure 100, then picked up by any container handling device and transported to a port column 119,120 for further transportation to an access station. The transportation from the port to the access station may require movement along various different directions, by means such as delivery vehicles, trolleys or other transportation lines. Note that the term 'tilted' means transportation of bins 106 having a general transportation orientation somewhere between horizontal and vertical.

In Fig. 1, the first port column 119 may for example be a dedicated drop-off port column where the container handling devices 200,300,400 can drop off bins 106 to be transported to an access or a transfer station, and the second port column 120 may be a dedicated pick-up port column where the container handling devices 200,300,400 can pick up bins 106 that have been transported from an access or a transfer station.

The access station may typically be a picking or a stocking station where product items are removed from or positioned into the bins 106. In a picking or a stocking station, the bins 106 are normally not removed from the automated storage and retrieval system 1, but are returned into the framework structure 100 again once accessed. A port can also be used for transferring bins to another storage facility (e.g. to another framework structure or to another automated storage and retrieval system), to a transport vehicle (e.g. a train or a lorry), or to a production facility. A conveyor system comprising conveyors is normally employed to transport the bins between the port columns 119,120 and the access station.

If the port columns 119,120 and the access station are located at different levels, the conveyor system may comprise a lift device with a vertical component for transporting the bins 106 vertically between the port column 119,120 and the access station.

The conveyor system may be arranged to transfer bins 106 between different framework structures, e.g. as is described in WO2014/075937A1.

When a bin 106 stored in one of the columns 105 disclosed in Fig. 1 is to be accessed, one of the container handling devices 200,300,400 is instructed to retrieve the target bin 106 from its position and transport it to the drop-off port column 119. This operation involves moving the container handling device 200,300,400 to a location above the storage column 105 in which the target bin 106 is positioned, retrieving the bin 106 from the storage column 105 using the container handling device's 200,300,400 lifting device, and transporting the bin 106 to the drop-off port column 119. If the target bin 106 is located deep within a stack 107, i.e. with one or a plurality of other bins 106 positioned above the target bin 106, the operation also involves temporarily moving the above-positioned bins prior to lifting the target bin 106 from the storage column 105. This step, which is sometimes referred to as "digging" within the art, may be performed with the same container handling device that is subsequently used for transporting the target bin to the drop-off port column 119, or with one or a plurality of other cooperating container handling devices. Alternatively, or in addition, the automated storage and retrieval system 1 may have container handling devices 200,300,400 specifically dedicated to the task of temporarily removing bins 106 from a storage column 105. Once the target bin 106 has been removed from the storage column 105, the temporarily removed bins 106 can be repositioned into the original storage column 105. However, the removed bins 106 may alternatively be relocated to other storage columns 105.

When a bin 106 is to be stored in one of the columns 105, one of the container handling devices 200,300,400 is instructed to pick up the bin 106 from the pick-up port column 120 and transport it to a location above the storage column 105 where it is to be stored. After any bins 106 positioned at or above the target position within the stack 107 have been removed, the container handling device 200,300,400 positions the bin 106 at the desired position. The removed bins 106 may then be lowered back into the storage column 105, or relocated to other storage columns 105.

For monitoring and controlling the automated storage and retrieval system 1, e.g. monitoring and controlling the location of respective bins 106 within the framework structure 100, the content of each bin 106; and the movement of the container handling devices 200,300,400 so that a desired bin 106 can be delivered to the desired location at the desired time without the container handling devices 200,300,400 colliding with each other, the automated storage and retrieval system 1 comprises a control system 700 which typically is computerized and which typically comprises a database for keeping track of the bins 106.

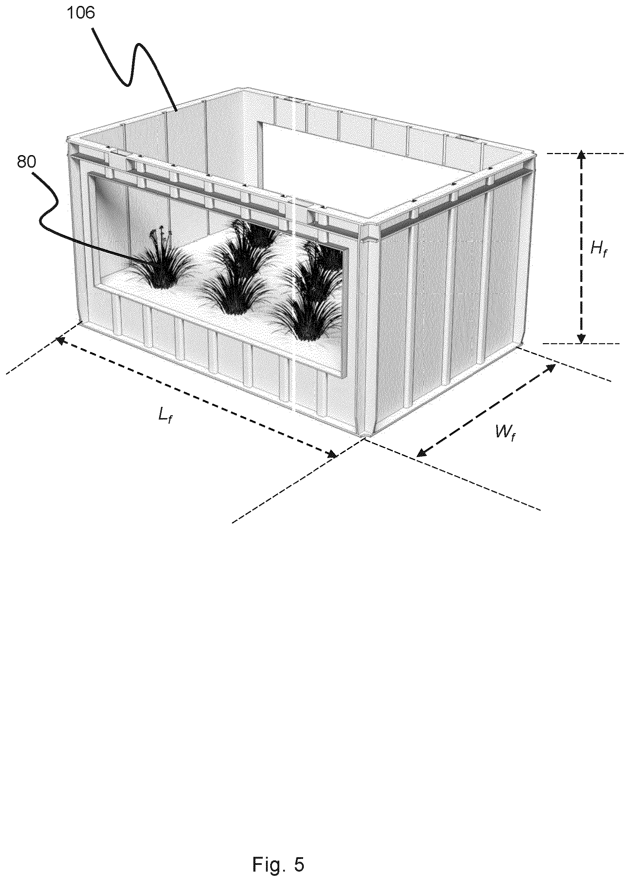

Fig. 5 shows examples of crops 80 stored in a bin 106 having height *H_{f},* a width *W_{f}* and a length *L_{f}.*

Vertical farming using cubic storage systems are known. One example of such storage system is described in EP 3326552 A1 where bins with plants/crops are arranged in stacks, and where individual bins may be removed or inserted by a load handling device operating on rails on top of a storage grid. The prior art system also includes an illumination system comprising a controller and lighting device arranged above each bin. The controller may control the spectrum of emitted light. A similar prior art system with stacked bins is disclosed in EP 3282830 A1 and, from the same patent family, US 2018/035625 A1.

For vertical farming, a storage system with stacks 107 of bins 106 is technically challenging since optimal cultivation of plants/crops 80 within bins 106 require daily cycling of light and darkness, as well as regular supply of water. Furthermore, due to the compactness of the stacks 107 in a prior art storage system as shown in Fig. 1, any maintenance of equipment related to the illuminations and/or irrigations may prove difficult.

Note that vertical farming is hereinafter defined as plants / crops growing in beds / areas that are stacked in the height, thereby saving space for growing.

WO2021/198036A1 describes a storage grid for storing storage containers and a method for operating such a storage grid. The storage grid comprises a plurality of horizontal container supporting frameworks distributed vertically with vertical offsets, each comprising one or more displaceable container supports, wherein each container support displays at least one hole with an opening size being at least a maximum horizontal cross section of the storage containers to be stored.

An objective of the present invention is to provide an automated storage and retrieval system using the concept of vertical farming which can provide illumination to contents of storage containers.

Another objective of the present invention is therefore to provide an automated storage and retrieval system combining traditional storage of storage containers with storage allowing illumination of plants / crops within the storage containers, thereby allowing simulation of daylight variations for plants / crops in their natural habitat.

Yet another objective of the present invention is to provide an automated storage and retrieval system allowing storage of storage containers in a compact storage arrangement as described above while also allowing cultivation of plants / crops within the storage containers.

Yet another objective of the present invention is to provide an automated storage and retrieval system allowing easy access and treatment of plants / crops in individual storage containers.

Yet another objective of the present invention is to provide an automated storage and retrieval system allowing maintenance of related equipment without the need of shutting down the operation.

Yet another objective of the present invention is to provide an automated storage and retrieval system allowing cultivation adapted to different kind of plants / crops.

Yet another objective of the present invention is to provide an automated storage and retrieval system allowing optimized conditions for illumination of plants / crops within storage containers.

Hereinafter, 'plants' or 'crops' are to be interpreted broadly to include any hydroponic cultivation systems such as herbs, medicinal plants, ornamental and general crops/plants, algae, etc. Storage of aquaponic cultivation systems within the storage containers may also be envisaged.

### Summary of the invention

The invention is set forth in the independent claims and the dependent claims describe certain optional features of the invention.

In a first aspect, the invention concerns an automated storage and retrieval system comprising storage containers / good holders, an illuminable storage grid, a support displacement system and a container handling device.

The illuminable storage grid comprises horizontally displaceable container supports each arranged with a vertical offset *ΔdV* to an adjacent container support and configured to support a plurality of the storage containers, wherein at least one of the container supports is an illuminable container support that is configured to illuminate an area below and/or above and wherein the illuminable container support has at least one aperture configured to allow passage of at least one of the storage containers therethrough, i.e. having a size at least a maximum horizontal cross section of the storage containers. Each horizontally displaceable container support may be further divided into two or more horizontally displaceable container support subsets. The vertical offsets are at least the height of the storage container to be stored. Furthermore, the container supports are preferably arranged parallel to each other. In a preferred configuration, at least 50 % of the container supports are illuminable container supports, more preferably at least 75 %, for example all but the lowermost container support.

The support displacement system is configured to displace one or more of the container supports and/or subsets horizontally, for example configured to displace all but the lowermost container supports and/or all but the uppermost container supports and/or all of the illuminable container supports.

The container handling device is configured to move, preferably in horizontal direction only, between a first location above or on the illuminable storage grid and a second location outside the horizontal periphery of the illuminable storage grid. The handling device comprises a lifting device configured to releasably grab and lift at least one of the storage containers from one of the container supports. The handling device may for example be a wheeled vehicle or a crane suspended in a gantry crane or a ceiling. During cultivation of plants / crops, the first location and the second location may simulate day-time storage and night-time storage, respectively.

The system may also comprise a control system configured to monitor and control movements of at least the container handling device, and preferably also other systems such as the support displacement system and/or illumination systems.

Note that good holders should hereinafter be interpreted as any supporting objects capable of supporting or holding plants / crops, including cuboid form containers, trays, containers with portion of sides absent, etc. Hereinafter, all type of good holders will be referred to as storage containers.

A container with an open structure (e.g. where some or all of the sides were absent and/or with holes and/or in form of meshes) would also allow illumination of upper regions of the containers even with configurations where illumination sources are arranged below the containers.

The storage system provides a solution for vertical farming having the possibility of selective illumination and that allows easy and swift access to individual crops to be transported into and out of the storage areas.

**In** an exemplary configuration, the illuminable storage grid includes a rail system comprising a first set of parallel rails extending in a first direction X and a second set of parallel rails extending in a second direction Y perpendicular to the first direction X. The first and second sets of rails forming a grid pattern comprising adjacent grid cells, wherein each grid cell comprises a grid opening defined by a pair of adjacent rails of the first set of rails and a pair of adjacent rails of the second set of rails. The rail system is arranged above and adjacent to the uppermost horizontally displaceable container support at a first vertical offset *Vᵣ₁* being at least a maximum height of the storage containers to be stored. Furthermore, the container handling device may be configured to move horizontally in the first direction X and the second direction Y on the rail system and to lift the storage container through the grid opening by use of the lifting device. A grid cell is herein defined by a pair of rails of the first set and a pair of rails of the perpendicular second set, thereby defining a grid opening. Each rail may include a single track or a double track. The size of the rail system may, along at least one principal horizontal direction (X or Y), be larger or equal to the container supports.

Note that the grid-based rail system described above is similar to the rail system of the conventional storage grid as described in connection with Fig. 1.

However, in contrast to the prior art rail system, the rail system of this particular configuration may further include an illumination system allowing illumination of an area below, i.e. into the storage containers supported on the uppermost container support or container support subsets.

**In** another exemplary configuration, each container support is individually displaceable a distance corresponding to the distance of *n* grid cells in the first *X* and/or second *Y* direction, where *n* is an integer of 1 or more.

Furthermore, the apertures of each container support may be distributed with an offset corresponding to 2n+1 grid cells in the second direction *Y,* where *n* is an integer of 1 or more.

Note that it is not only that the container support is displaceable the distance of *n* grid cells, but that it is configured to move a set distance / interval that is equal to this grid cell distance.

**In** yet another exemplary configuration, the system comprises, at least occasionally during the operation of the system, moving storage containers between the illuminable storage grid and a further storage area provided below the second location. Thus, the system may comprise one or more stacks of storage containers suitable for cultivating crops, wherein the stack(s) is/are located outside the horizontal periphery of the illuminable storage grid, and wherein the second location is above the stack.

**In** this particular configuration where the storage containers are stored in stacks, the shape of the storage containers should preferably be cuboids.

The stacks may be stabilized in the horizontal direction by providing storage columns of upright members to support the stacks.

Furthermore, the height of the stack(s) is preferably lower than the height of the rail system, and the rail system is preferably extending above the stack(s).

**In** yet another exemplary configuration, the at least one illuminable container support comprises a container support frame and a plurality of illumination units supported within the container support frame, onto each of which a storage container may be supported, for example on a support structure which extends the horizontal space set by the container support frame. Such support structure may have an illumination transparent structure, for example an open structure having a plurality of apertures and/or a transparent material. Each illumination unit may comprise an illumination source configured to illuminate the adjacent surroundings, in particular the area below.

Furthermore, each illumination unit may be supported by the container support frame, for example, via said support structure, so as to be able to be removed by the container handling device. The illumination unit may comprise a grippable structure such as apertures or recesses arranged at the edges to allow the lifting device of the container handling device to releasably couple with the illumination unit. The cross-sectional area of the illumination unit is equal or smaller than the cross-sectional area of the storage container. Also, the horizontal shape of the illumination unit is preferably equal or similar to the horizontal shape of the storage container.

Furthermore, each illumination unit may comprise an illumination unit frame having a downwardly facing lower face at which the illumination source is arranged, thereby enabling downlight to the storage containers arranged underneath.

Furthermore, the illumination unit may comprise a power connector configured for receiving power from an illumination power supply and for supplying the received power to the illumination source. The power connector is preferably arranged at the lower face of the illumination frame and may comprise one or more spring-loaded connectors.

**In** yet another exemplary configuration, each horizontally displaceable container support may have principal directions in a first direction X and an orthogonal second direction Y and is configured as a matrix of container spaces with a plurality of container spaces arranged in the first direction X and a plurality of container spaces arranged in the second direction Y, and wherein an illumination unit is positioned in each container space to support a storage container.

**In** yet another exemplary configuration, each horizontally displaceable container support may have a plurality of apertures configured to allow passage of at least one of the storage containers therethrough. Hence, each aperture may have at least a maximum horizontal cross section of the containers to be stored. The plurality of apertures may be separated at equal distance in one or both principal directions, for example separated by one, two or three container space(s).

**In** yet another exemplary configuration, the support displacement system may comprise a displacement mechanism allowing displacement of one or more of the container supports in at least one principal direction Y and a remotely controlled motor operably coupled to the displacement mechanism. Alternatively, if each horizontally displaceable container support is further divided into two or more horizontally displaceable container support subsets, the displacement mechanism may be configured to displace each subset. The displacement mechanism may be at least one of a linear actuator, a gearwheel drive, a chain drive and a belt drive.

**In** yet another exemplary configuration, the illuminable storage grid may comprise a ventilation system for guiding flow of air or any other cooling gases in between the plurality of container supports.

**In** yet another exemplary configuration, the ventilation system may comprise a plurality of ventilation fans arranged at least partly within the vertical offsets *ΔdV, Vᵣ₁* between the container supports. The plurality of ventilation fans is preferably also arranged at one or more vertical sides of the illuminable storage grid.

In yet another exemplary configuration, each storage container may comprise vertical side walls displaying one or more light transparent areas such as openings or light transparent material(s), thereby allowing light to enter from the sides to aid the cultivation of the crops / plants.

The invention also concerns a method for storing and retrieving storage containers with crops / plants for cultivation from an illuminable storage grid of an automated storage and retrieval system as described above.

The at least one illuminable container support of the illuminable storage grid preferably comprises a plurality of illumination units onto which storage containers may be supported and a container support frame framing the illumination units. Further, each illumination unit may comprise an illumination source configured to illuminate a volume adjacent (preferably directly beneath) the illumination unit. The illumination unit is preferably removably arranged within the frame on a transparent support structure.

The method comprises the following steps:
A. Moving the container handling device to the first location where its lifting device is positioned in vertical alignment above either a target storage container supported on the uppermost container support or, if the target storage container is situated on one of the container supports beneath the uppermost container support, an aperture of the uppermost container support located horizontally closest to the target storage container.
*B.* If the target storage container is not positioned in vertical alignment below the aperture of the uppermost container support and below apertures of any container support(s) arranged there between, displacing the container supports by use of the support displacement system such that the target storage container is in vertical alignment below the aperture of the uppermost container support and (if present) apertures of any container supports arranged between the container support supporting the target storage container and the uppermost container support. Hence, the displacement may be any combination of container supports as long as said result is achieved.
C. Lowering, grabbing and lifting the target storage container by use of the lifting device.
D. Moving the container handling device with the target storage container to the second location.

In an exemplary method, the illuminable storage grid of the automated storage and retrieval system comprises a rail system comprising a first set of parallel rails extending in a first direction X and a second set of parallel rails extending in a second direction *Y* perpendicular to the first direction *X,* the first and second sets of rails forming a grid pattern comprising adjacent grid cells, wherein each grid cell comprises a grid opening defined by a pair of adjacent rails of the first set of rails and a pair of adjacent rails of the second set of rails.

The rail system is arranged above and adjacent to the uppermost horizontally displaceable container support at a first vertical offset *Vᵣ₁* being at least a maximum height of the storage containers (106) to be stored. Further, the container handling device is configured to move horizontally in the first direction X and the second direction Y on the rail system and to lift the storage container through the grid opening by use of the lifting device.

Each container support may be individually displaceable a distance corresponding to the distance of *n* grid cells in the first *X* and/or second Y direction, where *n* is an integer of 1 or more. The size of the rail system may, along at least one principal horizontal direction (X or Y), be larger or equal to the container supports. The rail system is similar to the rail system described in connection with Fig. 1.

The automated storage and retrieval system of the exemplary method also comprise a stack of storage containers located outside the horizontal periphery of the illuminable storage grid, wherein the second location is above the stack. Further, the height of the stack is lower than the height of the rail system and the rail system extends also above the stack, or at least some, preferably all, of the stacks in case of a plurality of stacks. The system may comprise upright members, wherein the stack(s) of storage containers are stabilized horizontally.

Furthermore, the apertures of each container support may be distributed with an offset corresponding to *2n+1* grid cells in the second direction *Y,* where *n* is an integer of 1 or more.

The exemplary method may comprise the steps of
- moving the container handling device with the target storage container along the rail system to the second location directly above the stack and
- storing the target storage container on top of the stack.

In another exemplary method not according to the invention as claimed, the method comprises the steps of
- moving the target storage container between the first location above or on the illuminable storage grid in which any crops stored within the target storage container are illuminated for a predetermined period of time by the at least one illuminable container support and the second location which is preferably located above stack(s) of storage containers, and
- moving the target storage container from either the first location or the second location to an access station for further transport outside the automated storage and retrieval system.

The yet another exemplary method, step B involves equal, and preferably also simultaneous, displacements of the at least one container support arranged above the container support supporting the target storage container.

Retrieving the storage containers from the second location and storing the target storage container in the first location may proceed in an equal or similar way as described above.

In the particular exemplary method, not according to the invention claimed, of retrieving a storage container stored in a stack below the second location, and where the container handling device(s) is/are operated on a rail system, the method may proceed as follows:
A'. Moving the container handling device to the second location where its lifting device is positioned in vertical alignment above either a target storage container on top of a target stack, if the target storage container is located deeper within the target stack, i.e. with one or a plurality of other storage containers positioned above the target storage container, temporarily moving the above-positioned storage containers using the lifting device prior to lifting the target storage container from the target stack.
B'. Lifting the target storage container from the target stack.
C'. Moving the container handling device, with the target storage container, to the first location where its lifting device is positioned in vertical alignment above either a vacant storage space on the uppermost container support or, if the vacant storage space is situated on one of the container supports beneath the uppermost container support, an aperture of the uppermost container support located horizontally closest to the vacant storage space.
*D'.* If the vacant storage space is not positioned in vertical alignment below the aperture of the uppermost container support and below apertures of any container support(s) arranged there between, displacing the container supports by use of the support displacement system such that the vacant storage space is in vertical alignment below the aperture of the uppermost container support and (if present) apertures of any container supports arranged between the container support with the vacant storage space and the uppermost container support. Hence, the displacement may be any combination of container supports as long as said result is achieved.
E'. Lowering the target storage container to the vacant storage space and releasing the grip on the target storage container.

The disclosure also concerns an additional method, not according to the invention claimed, for storing and retrieving storage containers with crops for cultivation from an automated storage and retrieval system as described above which may be implemented in combination with the above described method

In the system of the additional method the at least one illuminable container support comprises a container support frame and a plurality of illumination units onto which storage containers may be supported.

Each illumination unit may be arranged removable on top of a support structure, within the container support frame, or removably coupled to the support frame itself, and comprises an illumination source configured to illuminate a volume below the illumination unit.

The additional method comprises the following steps:
A. Moving the container handling device to the first location where its lifting device is positioned in vertical alignment above either a target illumination unit) of the uppermost container support or, if the target illumination unit is situated on one of the container support beneath the uppermost container support, an aperture of the uppermost container support located horizontally closest to the target illumination unit.
B. If the target illumination unit is not positioned in vertical alignment below the aperture of the uppermost container support and below apertures of any container support(s) arranged there between, displacing the container supports by use of the support displacement system such that the target illumination unit is in vertical alignment below the aperture of the uppermost container support and apertures of any container supports arranged between the container support with the target illumination unit and the uppermost container support. Hence, the displacement may be any combination of container supports as long as said result is achieved.
C. Lowering, grabbing and lifting the target illumination unit by use of the lifting device.
D. Moving the container handling device with the target illumination unit to the second location.

Any other of the above-mentioned features of the system and the method as described above are also applicable for the additional method.

By combining a prior art storage grid allowing storage by stacking storage containers and the inventive storage grid as described above, a storage system is achieved where the vehicles may move storage containers with cultivation systems between a night storage grid without illumination and a day storage grid with illumination.

For example, a storage container with a specific type of plants can be picked from the night storage grid to the day storage grid in order to provide light / illumination of the plants for a predetermined number of hours before being again transported back to the night storage grid.

The two different storage arrangement may hence simulate day-time and night-time.

Further, if the storage containers within the night storage grid are stacked, a configuration an automated storage and retrieval system is achieved that is optimized to take advantage of two storage options:
- use of a storage arrangement comprising light impenetrable, or near light impenetrable, stacks for achieving storage with high degree of compactness, and
- use of a more open structured storage arrangement allowing access to individual storage containers without the need of 'digging' and allowing illumination of crops within the storage containers.

By combining the highly compact stacking arrangement with the open structured arrangement, the overall storage volume is reduced compared to a storage solution for cultivating crops / plant in vertical farming, using the open structured arrangement only.

The system also allows for easier vertical farming. For example, each plants / crops may be made available for human or robotic operator(s) by displacing the relevant container support(s) a sufficient distance to allow for direct access by the operator(s), for example within reach of a robotic arm capable of performing various farming operations such as watering and/or cropping.

Alternatively, or in addition, the container handling device may transport the storage container to the operator for farming operations such as watering and/or cropping, for example by a robotic operator at or above the illuminable storage grid at the first location, or to a robotic or human operator at, above or below the second location.

### Brief description of the drawings

The following drawings depict embodiments of the present invention and are appended to facilitate the understanding of the invention.
Fig. 1 is a perspective view of a prior art automated storage and retrieval system.
Fig. 2 is a perspective view of a prior art remotely operating vehicle having a centrally arranged cavity for carrying containers therein.
Fig. 3 is a perspective view of a prior art remotely operating vehicle having a cantilever for carrying containers underneath.
Fig. 4 is a perspective view of a prior art remotely operating vehicle having an internally arranged cavity for carrying containers therein, wherein the cavity is offset from center relative to the X-direction.
Fig. 5 is a perspective view of a container suitable for storing and cultivating crops.

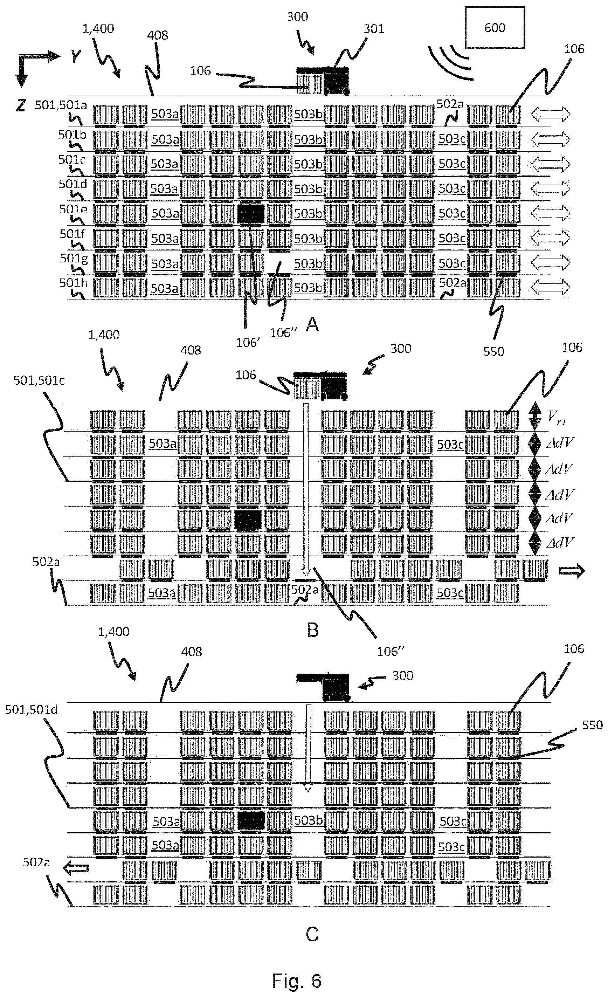

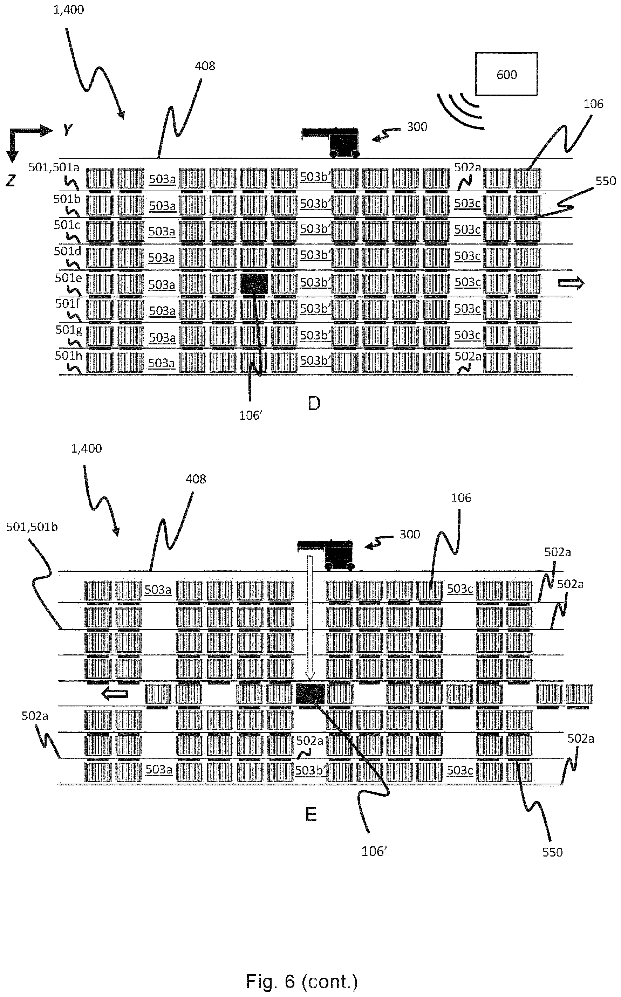

Fig. 6 is a side view of an illuminable storage grid constituting part of an automated storage and retrieval system in accordance with one embodiment of the invention, where Fig. 6A shows the system with a target container in an initial position, a vacant storage cell in an initial position and a remotely operated vehicle carrying a container to be placed in the vacant storage cell, Fig. 6B shows the system with the vacant storage cell in a position ready to receive the container from the remotely operated vehicle, Fig. 6C shows the system where the container is placed in the previously vacant storage cell and where a lifting device of the remotely operated vehicle has been retracted above the rail system, Fig. 6D shows the system with the remotely operated vehicle ready to lift the target container and Fig. 6E shows the system with the target container in a position ready to be lifted.
Fig. 7 is a top view of the illuminable storage grid of Fig. 6.
Fig. 8 is a perspective view of a possible configuration of a container support subset having a plurality of apertures / openings.
Fig. 9 is a perspective view of an illumination unit for supporting a container on one side and for illuminating an inner volume of a container on the opposite side.
Fig. 10 is a perspective view of a linear activator for displacing a container support or a container support subset.
Fig. 11 is a top view of an illuminable storage grid below a rail system, wherein all container supports of the storage grid are aligned relative to each other with vertical offsets and aligned to grid cells of a rail system.
Fig. 12 is a side view of the illuminable storage grid of figure 11.
Fig. 13 is a perspective view of a single illuminable container support configured as a matrix of container spaces surrounding both sides of a row of apertures arranged along the X direction, wherein figs. 13 A, B and C show the container support without containers and without illumination units, the container support with illumination units and without containers and the container support with illumination units and with containers, respectively.
Fig. 14 is a perspective view of a part of an exemplary illuminable storage grid, wherein fig. 14 A shows a belt driven support displacement device allowing displacement of the illuminable container support in Fig. 13, and fig. 14 B shows details of a container supporting framework rail into which the illuminable container support may be guided.
Fig. 15 is a perspective view of part of an exemplary illuminable storage grid, wherein container support(s) in all container supporting frameworks above the container support(s) of the lowermost container supporting framework have been displaced to provide vehicle access to lowermost containers.
Fig. 16 is a perspective view of an automated storage and retrieval system in accordance with one embodiment of the invention, showing an illuminable storage arrangement with displaceable container supports, a storage arrangement for stacking containers on top of each other and a common rail system allowing each remotely operating vehicle access to containers stored in both storage arrangements.
Fig. 17 is a top view of part of the illuminable storage grid of Fig. 16 showing plants / crops within each container.
Fig. 18 is a perspective view of a supporting framework comprising a container support having removable illumination units and bins with a cultivation system stored therein.

### Detailed description of the invention

In the following, different alternatives will be discussed in more detail with reference to the appended drawings. It should be understood, however, that the drawings are not intended to limit the scope of the invention to the subject-matter depicted in the drawings. Furthermore, even if some of the features are described in relation to the system only, it is apparent that they are valid for the methods as well, and vice versa.

The present invention concerns a system having a storage grid 500 used for storing and cultivating biological species such as plants / crops 80 within bins 106.

Fig. 5 shows examples of plants 80 stored in a bin 106 having height *H_{f},* a width *W_{f}* and a length *L_{f}.* To ensure sufficient light for allowing cultivation of the plants 80, the bin 106 is in this embodiment designed with openings on top and on two opposite vertical sides.

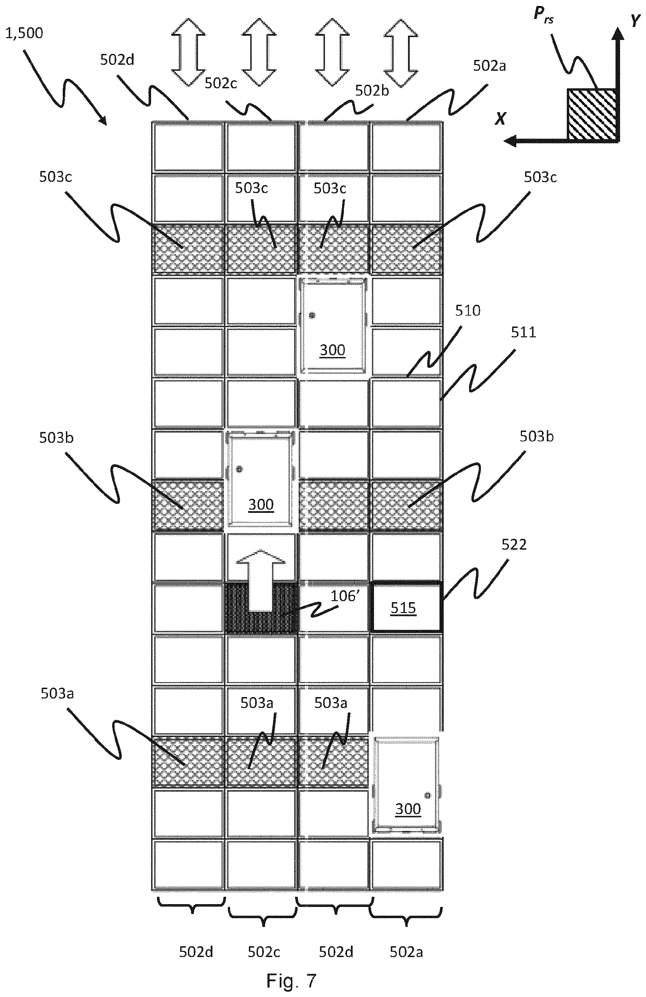

With particular reference to the embodiment shown in Fig. 6 and Fig. 7, the inventive storage and retrieval system 1 with an illuminable storage grid 500 comprises container handling devices in form of remotely operated vehicles 300 operating on a rail system 508. The rail system 508 comprises a first set of parallel rails 510 arranged to guide movements of the remotely operated vehicles 300 in a first direction X across the storage grid 500 and a second set of parallel rails 511 arranged perpendicular to the first set of rails 510 to guide movement of the remotely operated vehicles 300 in a second direction Y which is perpendicular to the first direction X. The bins 106 stored within the storage grid 500 are accessed by the remotely operated vehicles 300 through grid openings 515 in the rail system 508, where each grid opening 515 is enclosed by a grid cell 522. The rail system 508 extends in a horizontal plane *Pᵣₛ.*

As best seen in Fig. 6B, the bins 106 are stored on a plurality of horizontal container supporting frameworks 501a-h distributed in a Z direction below the rail system 508 with a vertical offset indicated by *Vᵣ₁* (i.e. the offset between the lower edge of the rail system 508 and the lower edge for an uppermost framework 501a directly beneath the rail system 508) and a vertical offset indicated by *ΔdV* (i.e. the average offset between the lower edges of the deeper frameworks 501b-h).

The vertical offsets *Vᵣ₁* and each *ΔdV* may be selected to provide a height that is equal or higher than a maximum height of one bin 106 or a stack of several bins 106 within a specific framework 501. As an example, the uppermost framework 501a may be adapted to store stacks of bins 106 while the below situated frameworks 501b-k may be adapted to store single (unstacked) bins 106. As a further example, several or all frameworks 501 of the grid 500 may be adapted to store stacks of several bins 106. The different frameworks 501 of the same grid 500 may also be configured to store stacks of unequal numbers of bins 106. The vertical space (i.e. the available height) required for one or several frameworks 501 of the grid 500 to be adapted to store a stack of several bins 106 may be obtained by reducing the total number of frameworks 501 as compared to a configuration of the grid 500 where all frameworks 501 are adapted to store single (unstacked) bins 106.

**In** case of cultivation of crops / plants 80, the bottom side of the bins 106 stacked in such stacks (i.e. on a framework 501) should contain openings (e.g. a mesh) to allow downlights above the stacks to reach the lowermost crops / plants 80. **In** one specific scenario, the most light demanding crops / plants 80 are placed in the topmost storage bin 106 of the stack, while the least light demanding crops / plants 80 are placed in the lowermost storage bin 106 of the stack.

Figs. 6A-E show vertical cross-sections the storage and retrieval system 1 with equal spacings *ΔdV* between the different frameworks 501, and where each bin 106 is supported on an illumination unit 550 configured to provide illumination to crops / plants 80 within the bin 106 arranged directly beneath.

In Fig. 6A, a target bin 106' and a vacant storage space 106" are located in different frameworks 501e,501g. The remotely operated vehicle 300 approaching to pick up the target bin 106' typically brings another bin 106 that is to be stored in the illuminable storage grid 500. Before the remotely operated vehicle 300 can pick up the target bin 106', the vehicle held bin 106 is advantageously placed in a vacant storage space 106" within the storage grid 500. As further explained below, access to different frameworks 501a-h is achieved by apertures 503 present within container supports 502 horizontally displaceable within some or all of the frameworks 501.

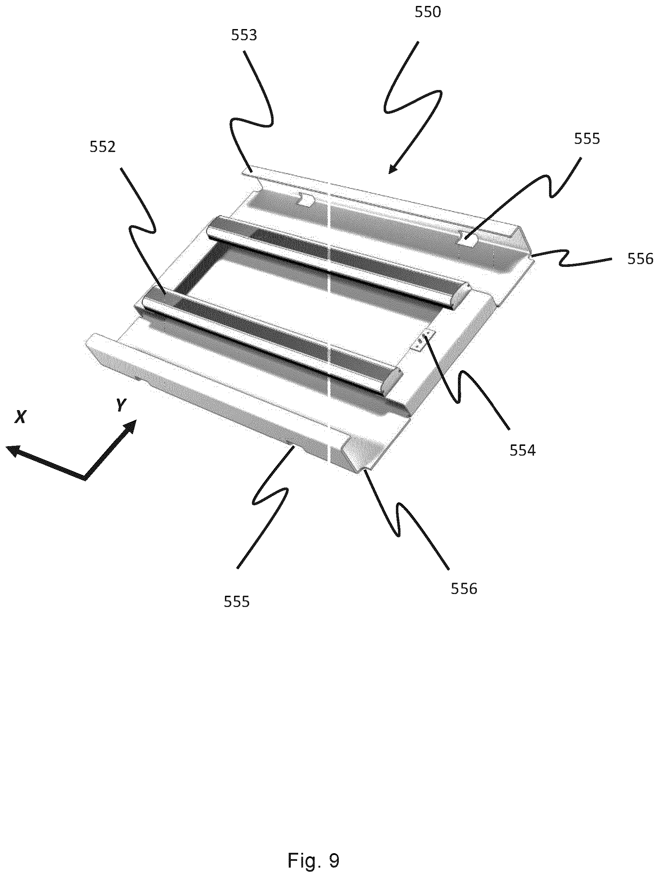

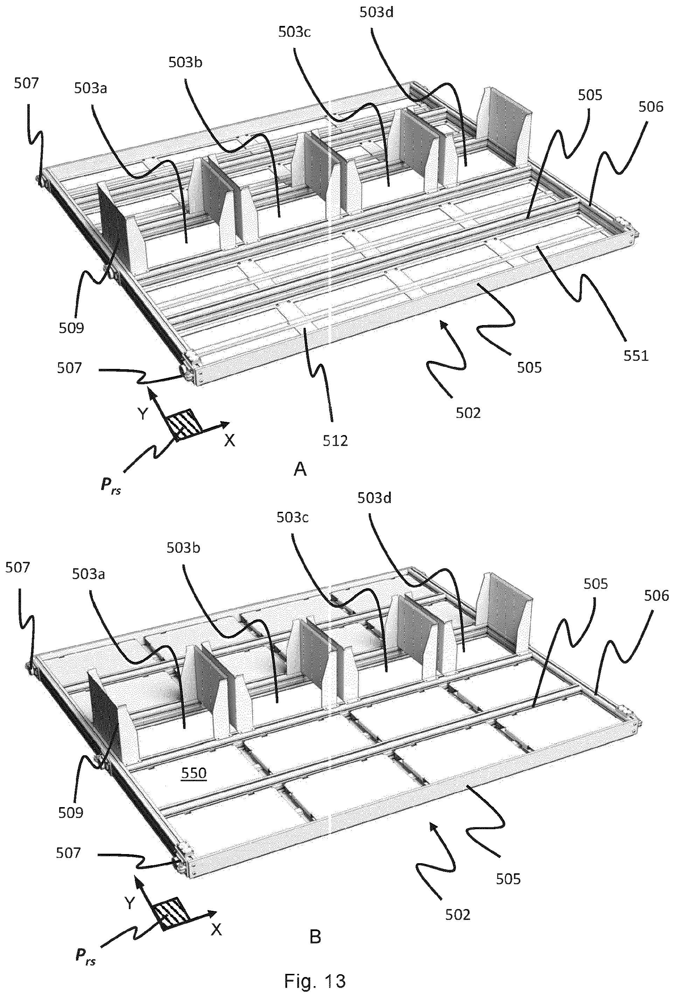

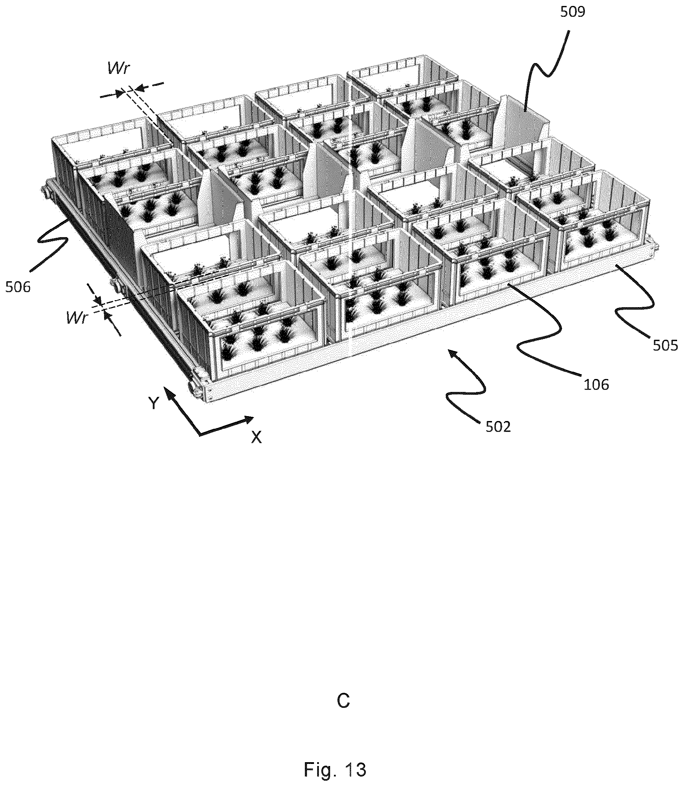

In Fig. 6B the container support 502 within the second lowermost framework 501g has been moved a distance of two grid cells 502 such that the vacant storage space 106" is in a position ready to receive the bin 106 from the remotely operated vehicle 300. The vacant storage space 106'' (into which the bin 106 is to be placed) and the target bin 106' are in a preferred case horizontally closest to the same target aperture 503b'. In this way the vehicle 300 does not need to move between the two operations during the same exchange process. In an even more preferred case, the vacant storage space 106" and the target bin 106' can be located on the same container support 502 (not shown in Fig. 6). In this way the necessary movements of the vehicle's lifting device 303 in the exchange process is kept to a minimum. The movement of the container support 502 may be performed by a support displacement device 700 such as a linear actuator (Fig. 9) and/or a belt driven system (Fig. 13).

Fig. 6C shows the storage system 1 where the bin 106 earlier held by the vehicle 300 has been arranged into the previously vacant storage space 106". Further, the lifting device 303 has been retracted vertically above the container supporting framework 501e of the target bin 106'. Consequently, the lifting device 303 has been sufficiently retracted so that displacement of the container support 502 with the target bin 106' can proceed until the target bin 106' is situated beneath the target aperture(s) 503b' (Fig. 6D). By retracting the lifting device 303 only just above the position of the container supporting framework 501e of the target bin 106', the exchange process becomes more time efficient.

Fig. 6D shows the storage system 1 with the vehicle 300 ready to lift the target bin 106' after placing the formerly held bin 106 into the vacant storage space 106'', i.e. with its lifting device 303 arranged above the framework 501e supporting the target bin 106'. The container support 502 of the previously vacant storage space 106", now occupied by the bin 106, has been displaced back to its initial position. Displacement of the container support 502 of the target bin 106' may now commence in order to align the target bin 106' beneath the target aperture(s) 503b'.

Fig. 6E shows the storage system 1 with the target bin 106' arranged beneath the target aperture(s) 503b', i.e. in a position ready to be lifted by the lifting device 303 of the vehicle 300.

After the target bin 106' has been lifted above the container supporting framework 501e, the container support 502 can be displaced back to its initial position.

Fig. 6 shows an embodiment wherein each bin 106 on each container support 502, with the exception of the container support 502 of the lowermost container supporting framework 501h, is supported on an illumination unit 550 allowing illumination of the bin 106 arranged directly below, i.e. in vertical alignment on the adjacent container support 502.

As shown in Fig. 7, each container support 502 of each framework 501a-h may comprise several elongated container support subsets 502a-d having their longitudinal orientation in the *Y* direction and arranged parallel to each other in the *X* direction. The different container supports 502a-d may be moved a distance in the *Y*-direction corresponding to an integer number of grid cells by use of the displacement device 700.

The container support subsets 502a-d in each framework 501a-k displays apertures 503a-c distributed along the Y direction, where each aperture 503a-c has a cross sectional area being at least the cross-sectional area of a bin 106, i.e. at least *Wf* x *Lf* (see Fig. 5) in order to allow passage of the bin 106 therethrough.

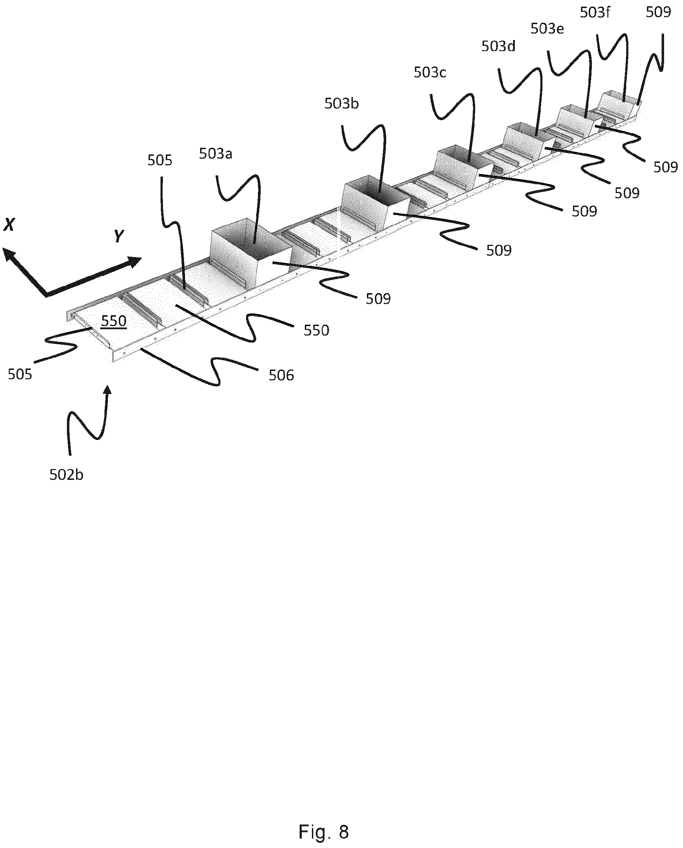

Fig. 8 shows an example of a single container support subset 502b having an elongated shape with a width in the X direction allowing placement of a single bin 106 of length *L_{f}.* **In** this particular configuration, the *Y* rib 506 extend along the full length of the container support subset 502b and the X ribs 505 extends along the width of the subset 502b.

Each of the illumination units 550 is removably arranged side by side between these apertures 503a-c and stabilized in the horizontal plane *Pᵣₛ* by *X* ribs 505 and *Y* ribs 506 framing the illumination units 550 along the *X* direction and the *Y* direction. Such *X* and *Y* ribs 505,506 may preferably also protrude upwards from each of the illumination units 550 to prevent the bins 106 to move horizontally relative to the container support 502.

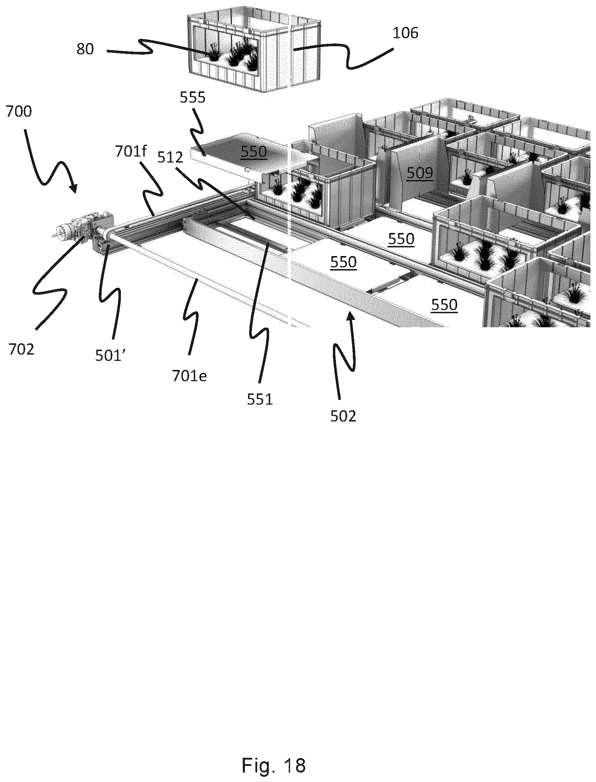

Moreover, each container support 502 may comprise a support structure 512 (figs. 13A and 18) arranged between the X ribs 505 and the Y ribs 506 to support each illumination units 550.

Fig. 9 shows an exemplary configuration of an illumination unit 550 comprising an illumination frame 553 / LED frame 553, a plurality of grippable structures 555 in form of apertures to enable releasable gripping by corresponding claws 304,404 constituting part of the lifting device 303,403, corner recesses 556 for receiving guiding pins 363 also constituting part of the lifting devices 303,403, an illumination source 552 in form of LED bars and a power connector 554 for receiving external electric power, for example from an illumination power supply 551 in form of one or more power bars extending along each row of illumination units 550 within a container support 502 (see fig. 18). The power connectors 554 may be a spring-loaded power connector to ensure sufficient contact pressure with the respective power bars 551. The power bars 551 may be a few millimeters wide metal sheets such as 3 mm Al sheets. To ensure that the illumination source 502 is positioned with offset above the respective power bar 551, the sides of the illumination frame 553 along the X direction have a U-form with a lower face contacting the support structure 512 of the container support 502.

The illumination sources 552 may be incandescent light bulbs, LEDS, florescent tubes or other light sources and are preferably configured to emit intensities and/or wavelengths that optimize the cultivation of the crops / plants 80 inside each bin 106. The optimization may involve optimizing (or at least enhancing) the intensities and/or wavelengths for photosynthesis in the stored plants 80. Examples are wavelengths in the blue range and/or red range as described in more detail below.

The optimized intensities and/or intensity range and/or wavelength and/or wavelength range may be set by the user prior to illumination and/or during illumination. The latter option requires that the illuminable container support is configured to adjust the intensity/intensities and/or wavelength/wavelengths, for example via a control system 600.

Instead of a support structure 512, the illumination units 550 may be supported on lower protrusions / lips of the *X* ribs and/or the *Y*-ribs (not shown).

The container support subset 502b of fig. 8 has apertures 503a-f along the *Y* direction after each third illumination unit 550. Each aperture 503a-f has a width and length in the *X* and *Y* directions, respectively, being slightly larger than the length *L_{f} and* width *W_{f}* of the bin 106. A container guiding structure 509 in form of a bottomless box is fixed along the peripherals of each aperture 503a-f in order for the bin 106 to be guiding correctly through the aperture 503a-f during lifting / lowering by the respective vehicles 300.

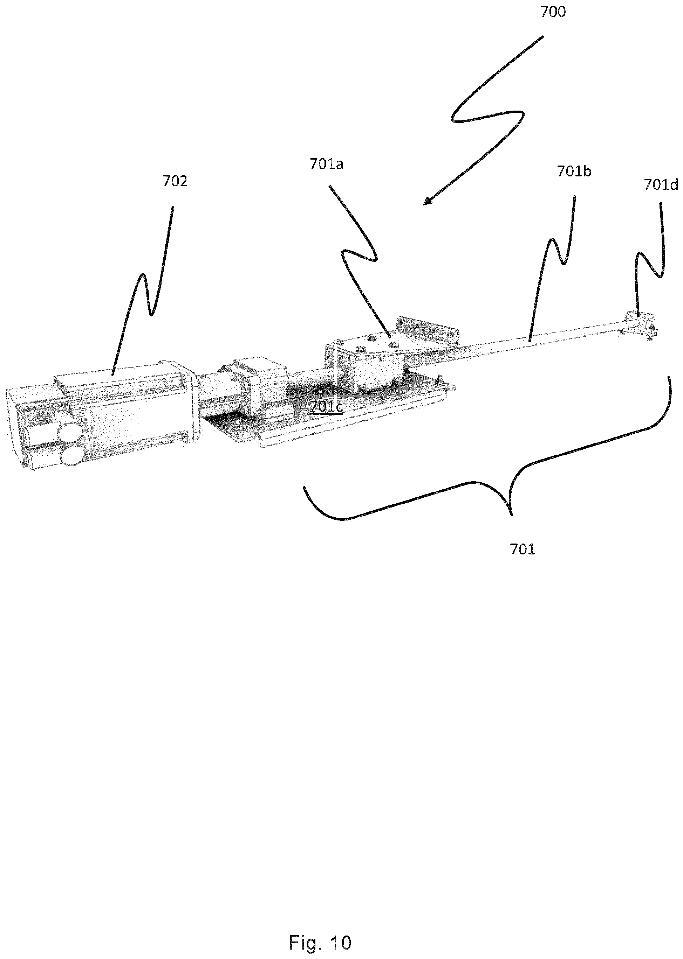

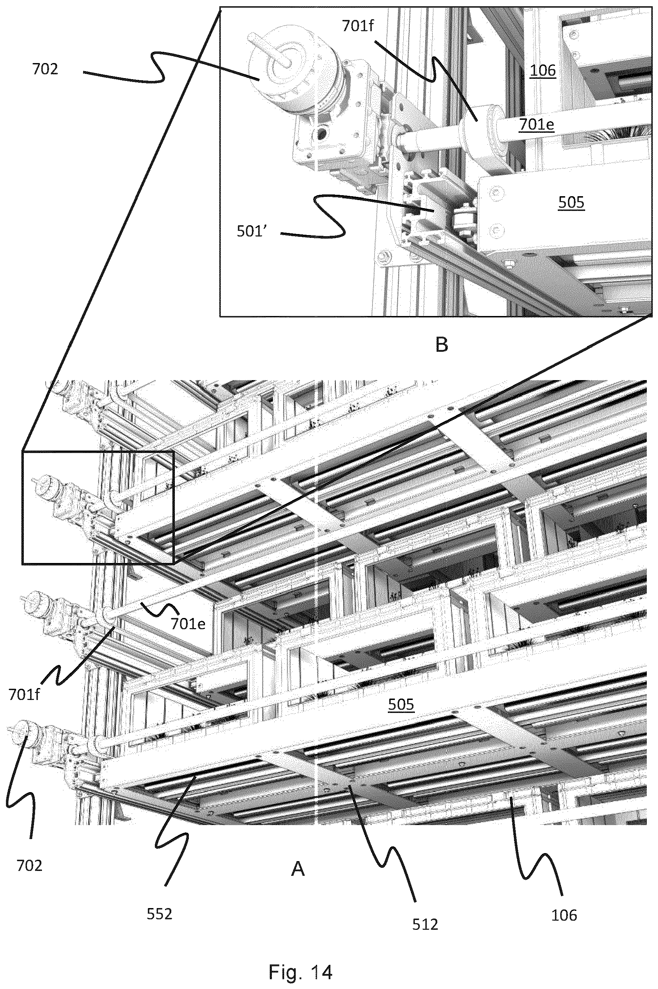

In order to store and retrieve a target bin 106' using the above described embodiment, the following operations are performed, with particular reference to Fig. 6D and E:
- The control system 600 gives instructions to the vehicle 300 to pick up a target bin 106' with coordinates [*X_{tc},Y_{tc},Z_{tc}*]*, 'tc'* corresponding to the target bin. This position corresponds to a bin 106 supported on an illumination unit 550 of a container support 502, or a container support subset 502a, forming part of a horizontal container support framework 501e at a depth of 3x*ΔdV+Vᵣ₁* below the rail system 508. The target bin 106 is separated in the Y direction to a nearest aperture 503b' (i.e. the target aperture) by one non-target bin 106 at position [*X_{tc},Y_{tc}+1,Z_{tc}*]*.* All the apertures 503 in the storage grid 500 are initially vertically aligned, that is, the *X-Y* position of the target aperture 503b' of the container support framework 501a adjacent the rail system 508, i.e. [*X_{tc},Y_{tc}+*2] is equal to the *X-Y* positions of the target apertures 503b' of the underlying container support frameworks 501b-h.
- The vehicle 300 moves by aid of its drive means 302a,b (Fig. 2) in the *X* and Y directions until its lifting device 303 is located directly above the target aperture 503b' situated closest in horizontal direction to the target bin 106'.
- During and/or after movement of the vehicle 300 to the position above the target aperture 503b', the control system 600 sends an instruction to a support displacement device 700 (see Figs. 10 and 14) to displace the container support 502, or container support subset 502a, of the container framework 501e a sufficient distance in the Y direction so that the target bin 106' is vertically aligned with the target apertures 503b' of the corresponding container supports 502, or container support subsets 502a, of the above situated container frameworks 501a-d.
- During and/or after the displacement of the container support(s) 502, or container support subset(s) 502a, the lifting device 303 of the vehicle 300 is activated and lowered down through the grip opening 515 and the vertically aligned target apertures 503b' until the gripping part of the lifting device 303 is in position to grip the target bin 106.
- After the target bin 106' has been gripped by the lifting device 303 and lifted above the above situated container framework 501d, the support displacement device 700 is again activated to move the container support 502, or container support subset 502a, back to its initial Y position, i.e. to position [*X_{tc},Y_{tc},Z_{tc}*]*.*
- When the target bin 106' has been lifted above the rail system 508, the vehicle 300 is moved to another location on the rail system 508, for example to a dedicated port column / chute for delivery to an access station.

This exchange process has the advantage that the need for digging performed for prior art storage and retrieval system is no longer necessary.

If the storage grid 500 also include removable illumination units 550 as described above, the same process steps may be performed to pick up or arrange individual illumination units 550 by use of the vehicle 300.

A process step where the lifting device 303,403 of the vehicle 200,300,400 is lifting both the illumination unit 550 and the bin 106 in one exchange process may also be envisaged. For example, if the bin 106 has a horizontal cross sectional area which is smaller than the horizontal cross sectional area of the illumination frame 553 onto which the bin 106 is supported, the gripping and guiding mechanisms 404,405 of the lifting device 303,403

The inventive storage grid 500 can be of any size. In particular it is understood that the the storage grid 500 can be considerably wider and/or longer and/or deeper than the size disclosed in the accompanied figures. For example, the storage grid 500 may have a horizontal extent with room for more than 700x700 bins and a storage depth of more than twelve bins.

A specific example of a displacement device 700 is shown in Fig. 10. The displacement of the container support subsets 502a-d (individually or collectively) is achieved by a mechanical linear actuator (ball screw) that translates rotational motion to linear motion. A threaded shaft 701b provides a helical raceway for ball bearings which act as a precision screw. The required rotation of the shaft 701b is achieved by an electric motor 702 connected to one of the shaft's end. A stopper 701d is fixed to the opposite end of the shaft 701b. A slider 701a is coupled to the rotational shaft 701b such that the slider 701a moves along the shaft 701b during rotation. By attaching the slider 701a to the end of the container support 502a-d, the desired displacement in the Y direction is achieved, for example lengths corresponding to 1 or 2 storage cells. The displacement mechanism 700 is supported to the storage grid 500 by a support plate 701c.

One way of installing an illuminable storage grid 500 as described above can be to remove all stacks of bins 106 beneath a rail system 108 of at least part of a prior art storage and retrieval system as shown in Fig. 1, and to mount the container supporting frameworks 501, the container supports 502 and the displacement mechanism 700 within the empty volume.

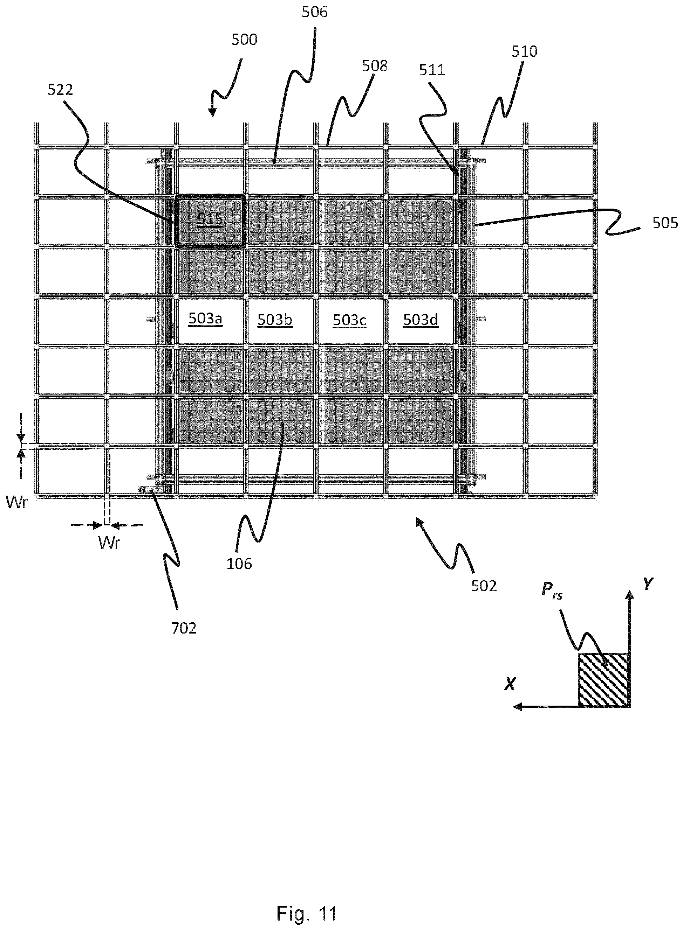

Figs. 11-15 shows a second embodiment of the illuminable storage grid 500.

As for the first embodiment the inventive automated storage and retrieval system 1 comprises remotely operated vehicles 300 operating on a rail system 508 comprising a first set of parallel rails 510 arranged to guide movements of the remotely operated vehicles 300 in a first direction X across the underlying container supporting frameworks 501 and a second set of parallel rails 511 arranged perpendicular to the first set of rails 510 to guide movement of the remotely operated vehicles 300 in a second direction Y which is perpendicular to the first direction X. The bins 106 stored within the storage grid 500 are accessed by the remotely operated vehicles 300 through grid openings 515 in the rail system 508, wherein each grid opening 515 is enclosed by a grid cell 522. The rail system 508 extends in a horizontal plane *Pᵣₛ* set up by the *X* and *Y* directions.

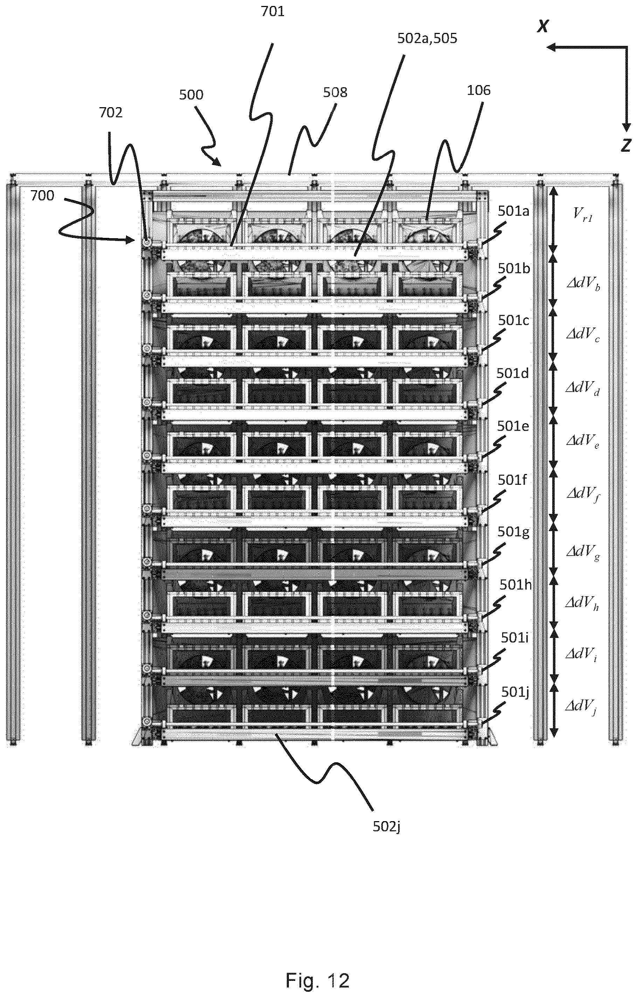

As best seen in Fig. 12 showing a side view of the second embodiment storage grid 500, the bins 106 are (as for the first embodiment) stored on displaceable container supports 502 distributed in a Z direction below the rail system 508 with a vertical offset indicated by *Vᵣ₁* and a vertical offset indicated by *ΔdV_{b-j}.* Each container support 502 forms part of a respective container supporting framework 501.

However, in contrast to the illustrated container support subsets in the first embodiment, each container support 502 allows support of a plurality of bins 106 in *both X* direction and *Y* direction. Fig. 12-15 illustrates an exemplary configuration of the second embodiment having a single container support 502 at each framework 501a-j, where each of these single container supports 502 may be displaced horizontally by a single displacement mechanism 700.

Fig. 13A, B and C show an example of a container support 502 in accordance with the second embodiment allowing storage of up to 16 storage bins, wherein Fig. 13A shows the container support 502 without the bins 106 and the illumination units 550, Fig. 13B shows the container support 502 without the bins 106 and with illumination units 550 and Fig. 13C shows the container support 502 with both the bins 106 (containing crops 80) and the illumination units 550. The total size of the container support 502 and the widths of the *X* and *Y* ribs 505,506 are chosen such that the bins 106 are spaced apart by a distance *Wr* in both *X* and *Y* directions. Each illumination unit 550 is supported on a support structure 512 extending horizontally within the inner boundaries set by the *X* and *Y* ribs 505,506. The support structure 512 is in Fig. 13A depicted as a plate with rectangular openings. However, the support structure 512 may be any structure that provides support for the illumination unit 550 and also allow light to be directed to container supports 106 arranged underneath.

As for the container support subset 502b shown in Fig. 8, the container support 502 of Fig. 13 A-C comprises a plurality of guide structures 509 for the apertures 503. The guide structure 509 is fixed along the peripherals of each aperture 503a-d in order to aid the bin 106 to be guided correctly through the aperture 503a-d during lifting / lowering by the vehicles 300.

Instead of, or in addition to, said support structure 512, the *X* and *Y* ribs 505,506 may have lower lips onto which the illumination units 550 may be supporting.

In the example of Fig. 13 A-C, the container support 502 has a matrix of bin spaces comprising four rows and five columns, where one column is a central line of apertures / openings 503 (e.g. four apertures 503 along the column).

Alternatively, the container support 502 may have one single aperture 503 extending through all four rows. In yet another alternative configuration, the container support 502 may have a combination of apertures 503 extending through one, two or three rows.

The horizontal extent of this matrix is a distance substantially equal to 4**L_{f}* along the first direction *X* and a distance substantially equal to 5**W_{f}* along the second direction Y, which includes the width of one aperture for allowing the above mentioned exchange process. Any spacing *Wr* of the bins 106 should be added to determine the size of the matrix.

The *X* ribs 505, the *Y* ribs 506 and any other components associated with the container support 502 may be connected to each other by means of fasteners, welding, snap lock systems, tongue and groove system or other known methods know to those skilled in the art.

Fig. 14 shows an example of a displacement mechanism 700 for a container support 502 of the second embodiment for horizontal displacement in the Y direction relative to the container supporting framework 501.

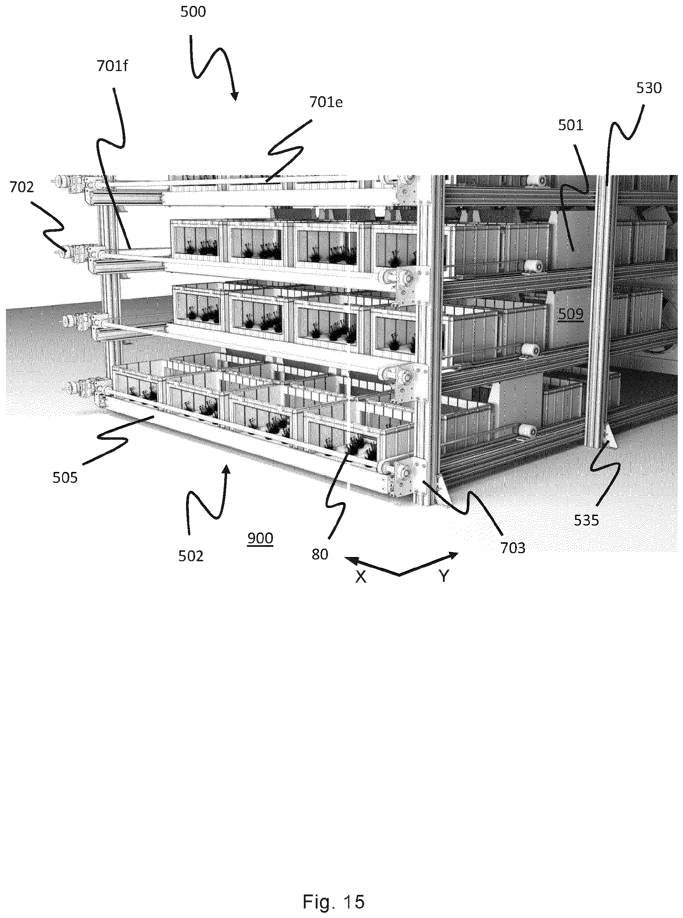

The support displacement device 700 in Fig. 14 comprises a displacement motor 702 such as an electric motor. The electric motor 702 may be arranged on the container supporting framework 501 by means of a bracket. The bracket can e.g. be connected to vertical pillars 530 of the storage grid 500 (see fig. 15).

The support displacement device 700 may comprise a rotational axle 701e configured to be driven by the electric motor 702. The rotational axle 701e is further configured to drive, i.e. displace, the displaceable container support 502 of the framework 501 by attaching chains or belts 701f therebetween.

The direction of displacement of the container support 502 depends on the direction of rotation of the rotational axle 701e and thus the direction of rotation of the electric motor 702.

For maintenance purposes, the components of the support displacement device 700 are preferably arranged in positions easily accessible for technicians. In particular the electric motors 702 (or alternative drive devices) should preferably be arranged on the edge of each container supporting framework 501 and be extending on the outside of the container supporting framework 501. By arranging the electric motors 702 of adjoining container supporting frameworks 501 on opposite sides of the container supporting frameworks 501, more space is made available for the technicians to install or perform maintenance on the support displacement device 700 (for example to replace the electric motor 702).

To be displaceable along the second horizontal direction Y, each container supporting framework 501 may comprise a guide track 501' oriented in the *Y* direction and the corresponding container support 502 may comprise a plurality of support frame wheels 507 mounted on the Y ribs 506, wherein the wheels 507 are configured to travel along the guide track 501'. In an alternative configuration, the guide track 501' may be provided on the container support 502 and the wheels 507 may be provided on the container supporting framework 501. As best shown in Fig. 14B, the guide tracks 501' may be extruded profiles.

Fig. 14A also shows a plurality of illumination units 550 constituting part of each container support 502. As described in more detail above in connection with Fig. 9, each illumination unit 550 comprises an illumination frame 553 acting as support for bins 106 at the frame's upper side and an illumination source 552 such as LEDs arranged at the frame's lower side. Hence, since the bins 106 are vertically aligned within the storage grid 500, the illumination sources 552 are situated directly above each of those bins 106 arranged on the nearest lower lying container supports 502, thereby providing illumination onto the crops / plants 80 for cultivation.

Fig. 15 is a perspective view of a lowermost part of the storage grid 500. In this configuration, either the lowermost container support 502j is displaced relative to the above container supports 502a-i in other for above arranged vehicles 200,300,350 to gain access through vertically aligned apertures 503 or free space over container support peripheries, or each of the above container supports 502a-i are displaced relative to the lowermost container support 502j for the same purpose.

The lowermost container support 502j, or the above container supports 502a-i, may be displaced a distance in the second direction Y corresponding to the length of an integer number of grid cell 522, for example one grid cell 522.

In a typical configuration, all of the container supports 502a-j in the storage grid 500 are configured to be separately displaceable.

In Fig. 15 it is shown that the storage grid 500 comprises a plurality of vertical pillars 530 supported by a floor or an elevated support 900. The connection to the floor / platform 900 may be achieved by means of pillar brackets 535.

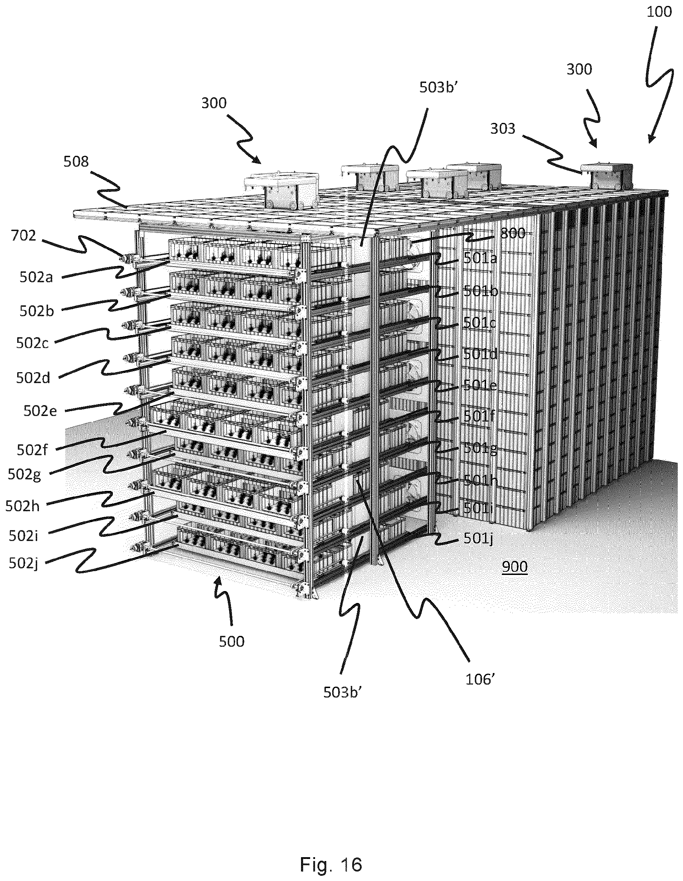

Fig. 16 shows a perspective side view of an inventive storage and retrieval system 1 with an illuminable storage grid 500 as described above as well as a second storage grid 100 in which the bins 106 are stored in a plurality of stacks 107. Remotely operated vehicles 300 are moving horizontally on a rail system 508 extending across both type of storage grids 100,500, thereby allowing each vehicle 300 access to any bins 106 stored in the system 1.

Within the illuminable storage grid 500, the above-mentioned support displacement devices 700 are shown arranged at the end of each container support 502. In total ten container supporting frameworks 501a-j are in Fig. 16 shown arranged beneath the rail system 508, each with one container support 502 displaceable in the *Y* direction. However, the system may easily be scaled down or up to other numbers of container supporting frameworks.

The operation of retrieving and storing bins 106 from/to the illuminable storage grid 500 of the second embodiment may proceed as for the first embodiment described above.

In one possible scenario, and again with particular reference to Fig. 6, the control system 600 sends an instruction to a remotely operating vehicle 300 to transport a specific bin 106' containing plants/crops 80 *from* the relevant container support 502e of the illuminable storage grid 500, where the plants/crops 80 are illuminated by an illumination source 552, *to* a position on top of a specific stack 107 of bins 106 of the second storage grid 100.

The relevant illumination source 552 may for example be LEDs or LED bars forming part of an illumination unit 550 situated directly above the target bin 106, i.e. in vertical alignment on the above container support 502.

If the target bin 106' containing the crops 80 is positioned on the uppermost container support 502a, the vehicle 300 may simply lift up the target bin 106' through the grid opening 515 positioned directly above (using its lifting device 303) and transport the target bin 106' to the grid opening 515 above the second storage grid 100 with the stack 107 of bins 106 on which the target bin 106' is to be stored.

If the target bin 106' containing the crops 80 is *not* positioned on the uppermost container support 502a and further *not* positioned directly below one or more of the vertically aligned apertures 503, the container support 502 is displaced the necessary distance along the Y direction (in Fig. 6 corresponding to two grid cells 522) to position the target bin 106' in vertically alignment with the target apertures 503' of the above situated container supports 502a-f.

From the initial position of the container support 502, there may not be sufficient space in the storage grid 500 for the container support 502g to be displaced a distance corresponding to the required number of grid cells 522 (in Fig. 6; two grid cells) in a single direction. **In** this case the target bin 106' may anyway be retrieved by displacing all of the above situated container supports 502a-f a distance corresponding to half the length of the required number of grid cells in one Y direction (+Y) (in Fig. 6; one grid cell to the left) and the container support supporting the target bin 106' in the opposite Y direction (-*Y*) (in Fig. 6, one grid cell to the right).

**In** the above scenario it is assumed that the vehicle 200,300,400 may move on a common rail system 508 in *X* and *Y* directions.

Note however, that other configurations may be envisaged such as handling device (s) suspended / coupled to a gantry crane(s) bridging the storage grids 100,500 and/or crane(s) suspended from the ceiling above the storage grids 100,500. **In** these cases a rail system 508 is not necessary.

Moreover, the system 1 may involve two separate rail systems, where one or more vehicles are operated on each rail system. Transport of bins 106 between the storage grids 100,500 may in the latter configuration take place by use of an exchange mechanism such as a delivery system on the vehicles allowing exchange directly between vehicles and/or use of a separate exchange system such as a crane arranged at, near or across the gap between the storage grids 100,500.

An automated storage and retrieval system 1 comprising *both* an illuminable storage grid 500 with possibility of illuminating the crops / plants 80 within bins 106 *and a* second storage grid 100 storing the bins 106 in a plurality of stacks 107 allows for a storage of bins 106 in a very compact arrangement, thereby keeping the required storage space to a minimum, while allowing cultivation of plants / crops 80 contained within the bins 106. A control system 600 controlling the container handling devices 200,300,400 may therefore be programmed to control optimal periods for illumination and non-illumination of the plants / crops 80.

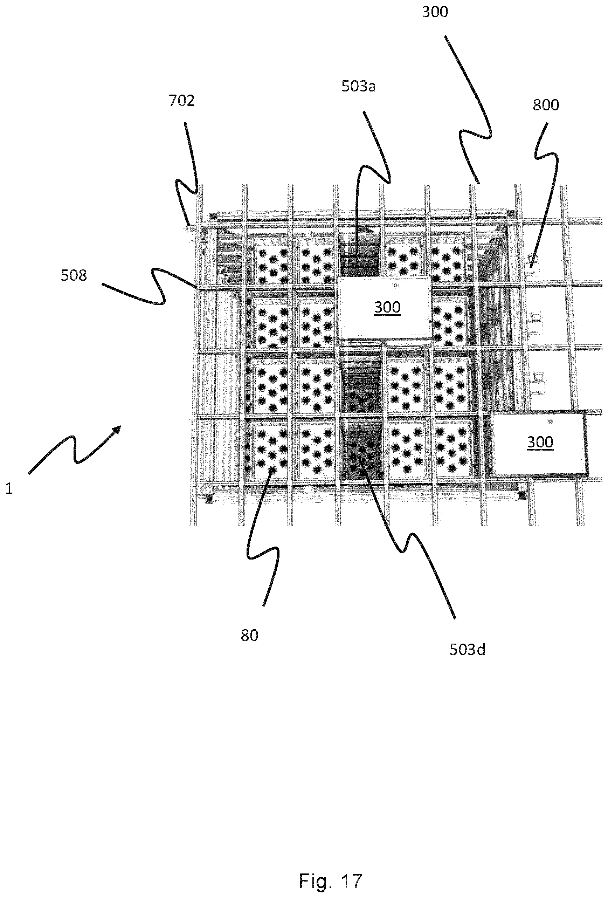

With particular reference to Fig. 17 showing a top view of a storage and retrieval system 1, remotely operated vehicles 300 have access to the bins 106 containing crops / plants 80 situated either immediately below the rail system 508 or immediately below vertically aligned apertures 503. Due to the above described configuration with horizontally displaceable container supports 502, the bins 106 accessible by the vehicles 300 via vertically aligned apertures 503 may be controlled via a control system 600 and a displacement mechanism 700.

Likewise, the vertically aligned apertures 503 enables retrieval and placement of illuminable units 550 during e.g. repairs.

Figs. 18 shows an exemplary configuration of a container supporting framework 501 with a displaceable container support 502 and a displacement mechanism 700 with a single displacement motor 702 driving a rotational axle 701e and a belt 701f. The container support 502 comprises a plurality of removable illumination units 550 supporting bins 106 with crops / plants 80.

As mentioned above, the choice of illumination source(s) 552, the choice of intensity and/or wavelength(s) emitted from the illumination source(s) 552, the use of illumination modifying means such as reflectors / diffusers and the distance(s) *ΔdV, Vᵣₗ* between the container supporting framework(s) 501 / rail system 508 may be adjusted in order to optimize the cultivation of particular crops / plants 80.

In the preceding description, various aspects of the automated storage and retrieval system with the illuminable storage grid and the associated method have been described with reference to the illustrative embodiment. For purposes of explanation, specific numbers, systems and configurations were set forth in order to provide a thorough understanding of the system and their workings. However, this description is not intended to be construed in a limiting sense. Various modifications and variations of the illustrative embodiment, as well as other embodiments of the system or method, which are apparent to persons skilled in the art to which the disclosed subject matter pertains, are deemed to lie within the scope of the present invention as defined by the appended claims.

### Reference numerals:

| | |
|---|---|
| 1 | Automated storage and retrieval system |
| 80 | Crops / plants / biological species |
| 100 | Framework structure / second storage grid |
| 100a | Storage space / second storage space |
| 102 | Upright members of storage grid |
| 103 | Horizontal members of storage grid |
| 105 | Storage column |
| 106 | Container / storage container / bin |
| 106' | Particular position of a container / target container / target bin |
| 106" | Vacant storage space for a container / bin |
| 107 | Stack |
| 108 | Prior art rail system |
| 110 | Parallel rails in first direction (*X*) |
| 111 | Parallel rail in second direction (*Y*) |
| 115 | Grid opening |
| 119 | First port column / drop-off column |
| 120 | Second port column / pick-up column |
| 200 | Prior art container handling device / remotely operated vehicle with central cavity |
| 201 | Handling device body / Vehicle body |
| 202a | Drive means in first direction (*X*) |
| 202b | Drive means in second direction (*Y*) |
| 300 | Prior art container handling device / remotely operated vehicle with cantilever |
| 301 | Handling device body / Vehicle body |
| 302a | Drive means / wheel arrangement, first direction (*X*) |
| 303b | Drive means / wheel arrangement, second direction (*Y*) |
| 303 | Lifting device |
| 304 | Gripper element |
| 305 | Guiding pin |
| 400 | Prior art container handling device / remotely operated vehicle with offset cavity |
| 401 | Handling device body / Vehicle body |
| 402a | Drive means / wheel arrangement, first direction (*X*) |
| 402b | Drive means / wheel arrangement, second direction (*Y*) |
| 403 | Lifting device |
| 404 | Gripper element |
| 405 | Guiding pin |
| 500 | Illuminable storage grid |
| 501 | Horizontal container supporting framework |
| 501' | Guide track |
| 501a | Uppermost container supporting framework |
| 501b-i | Intermediate container supporting framework(s) |
| 501j | Lowermost container supporting framework |
| 501' | Container supporting framework rail |
| 502, 502a-d | Container support |
| 503, 503a-f | Aperture / opening (in container support 502) |
| 503b' | Target aperture / opening |
| 505 | Container support frame, X-direction |
| 506 | Container support frame, Y-direction |
| 507 | Support frame wheel (arranged within track 501') |
| 508 | Rail system |
| 509 | Container guiding structure (for aperture/opening) |
| 510 | First set of parallel rails |
| 511 | Second set of parallel rails |
| 512 | Support structure (for container support) |
| 515 | Grid opening |
| 522 | Grid cell |
| 530 | Vertical pillar |
| 535 | Pillar bracket |
| 550 | Illumination system / illumination unit |
| 551 | Illumination power supply for illumination system or units/power bar |
| 552 | Illumination source / LEDs / LED bars |
| 553 | Illumination frame / LED frame |
| 554 | Power connector |
| 555 | Grippable structure, recess / aperture |
| 556 | Guiding pin recess / corner recess |
| 600 | Control system |
| 700 | Support displacement device |
| 701 | Displacement mechanism |
| 701a | Slider |
| 701b | Threaded shaft |
| 701c | Support plate |
| 701d | Stopper |
| 701e | Rotational axle |
| 701f | Belt |
| 702 | Displacement motor |
| 703 | Bracket for displacement mechanism |
| 800 | Ventilation system |
| 900 | Floor / platform |
| *X* | First direction |
| *Y* | Second direction |
| *Z* | Third direction |
| *Pᵣₛ* | Horizontal plane |
| *W_{f}* | Width of container / bin |
| *L_{f}* | Length of container / bin |
| *H_{f}* | Height of container / bin |
| *Vᵣₗ* | Offset between lower edge of rail system and lower edge of uppermost container supporting framework / first vertical offset |
| *ΔdV* | Offsets between lower edges of container supporting frameworks below the uppermost container framework / vertical offset |

## Claims

1. An automated storage and retrieval system (1) comprising:
- storage containers (106);
- an illuminable storage grid (500) comprising:
- horizontally displaceable container supports (502;502a-j) each arranged with a vertical offset (*ΔdV*) to an adjacent horizontally displaceable container support (502;502a-j) and configured to support a plurality of the storage containers (106),
- wherein at least one of the horizontally displaceable container supports (502) is an illuminable container support (502) that is configured to illuminate an area below and
- wherein the illuminable container support (502) has at least one aperture (503a-f) configured to allow passage of at least one of the storage containers (106) therethrough,
- a support displacement system (700) for displacing at least one of the container supports (502) horizontally; and
- a container handling device (200,300,400) configured to move between
- a first location above or on the illuminable storage grid (500) and
- a second location outside the horizontal periphery of the illuminable storage grid (500),
wherein the container handling device (200,300,400) comprises a lifting device (304) configured to releasably grab and lift at least one of the storage containers (106) from one of the horizontally displaceable container supports (502;502a-j).

2. The automated storage and retrieval system (1) in accordance with claim 1, wherein the illuminable storage grid (500) comprises
- a rail system (508) comprising
a first set of parallel rails (510) extending in a first direction (X) and
a second set of parallel rails (511) extending in a second direction (Y) perpendicular to the first direction (X),
the first and second sets of rails (510,511) forming a grid pattern comprising adjacent grid cells (522), wherein each grid cell (522) comprises a grid opening (515) defined by a pair of adjacent rails of the first set of rails (510) and a pair of adjacent rails of the second set of rails (511), and
- wherein the rail system (508) is arranged above and adjacent to the uppermost horizontally displaceable container support at a first vertical offset (*Vᵣₗ*)*,* and
- wherein the container handling device (200,300,400) is configured to move horizontally in the first direction (X) and the second direction (Y) on the rail system (508) and to lift the storage container (106) through the grid opening (515) by use of the lifting device (303,403).

3. The automated storage and retrieval system (1) in accordance with claim 2,
- wherein each container support (502) is individually displaceable a distance corresponding to the distance of *n* grid cells (522) in the first (X) and/or second (Y) direction, where n is an integer of 1 or more.

4. The automated storage and retrieval system (1) in accordance with any one of the preceding claims, wherein the system (1) comprises
- a stack (107) of storage containers (106) located outside the horizontal periphery of the illuminable storage grid (500), and
- wherein the second location is above the stack (107).

5. The automated storage and retrieval system (1) in accordance with claim 4, when depending on claim 2 or 3,
- wherein the height of the stack (107) is lower than the height of the rail system (508) and
- wherein the rail system (508) extends above the stack (107).

6. The automated storage and retrieval system (1) in accordance with any one of the preceding claims, wherein the at least one illuminable container support (502) comprises
- a container support frame (505,506) and
- a plurality of illumination units (550) supported within the container support frame (505,506), onto each of which a storage container (106) may be supported,
- wherein each illumination unit (550) comprises an illumination source (552).

7. The automated storage and retrieval system (1) in accordance with claim 6, wherein each illumination unit (550) is supported by the container support frame (505,506) so as to be removed by the container handling device (200,300,400).

8. The automated storage and retrieval system (1) in accordance with claim 6 or 7, wherein each illumination unit (550) comprises an illumination unit frame (553) having a lower face at which the illumination source (552) is arranged.

9. The automated storage and retrieval system (1) in accordance with any one of claims 6 to 8, wherein each illumination unit (550) comprises a grippable structure (555) configured to allow a releasable coupling with the lifting device (304).

10. The automated storage and retrieval system (1) in accordance with any one of claims 6-9, wherein the illumination unit (550) comprises a power connector (554) configured for receiving power from an illumination power supply (551) and for supplying the received power to the illumination source (552).

11. The automated storage and retrieval system (1) in accordance with any one of claims 6-10, wherein each horizontally displaceable container support (502)
has principal directions in a first direction (X) and an orthogonal second direction (Y) and
is configured as a matrix of container spaces with a plurality of container spaces arranged in the first direction (X) and a plurality of container spaces arranged in the second direction (Y), and
wherein an illumination unit (550) is positioned in each container space to support a storage container (106).

12. The automated storage and retrieval system (1) in accordance with any one of the preceding claims,
wherein each horizontally displaceable container support (502) displays a plurality of apertures (503a-f) configured to allow passage of at least one of the storage containers therethrough.

13. The automated storage and retrieval system (1) in accordance with any one of the preceding claims, wherein the support displacement system (700) comprises
a displacement mechanism (701) allowing displacement of one or more of the container supports (502) in at least one principal direction (*Y*) and
a remotely controlled motor (702) operably coupled to the displacement mechanism (701).

14. The automated storage and retrieval system (1) in accordance with any one of the proceeding claims, wherein the illuminable storage grid (500) comprises a ventilation system (800) for guiding flow of air in between the plurality of container supports (502).

15. The automated storage and retrieval system (1) in accordance with claim 14, wherein the ventilation system (800) comprises a plurality of ventilation fans arranged at least partly within the vertical offsets (*ΔdV, Vᵣₗ)* between the container supports (502).

16. The automated storage and retrieval system (1) in accordance with any one of the preceding claims, wherein each storage container (106) comprises vertical side walls displaying one or more openings.

17. A method for storing and retrieving storage containers (106) with crops (80) for cultivation from an illuminable storage grid of an automated storage and retrieval system (1) in accordance with any one of the preceding claims,
wherein the method comprises the following steps
A. moving the container handling device (200,300,400) to the first location where its lifting device (303,403) is positioned in vertical alignment above either a target storage container (106') supported on the uppermost container support (502a) or, if the target storage container (106') is situated on one of the container supports (502b-j) beneath the uppermost container support (502a), an aperture (503b') of the uppermost container support (502) located horizontally closest to the target storage container (106'),
*B.* if the target storage container (106') is not positioned in vertical alignment below the aperture (503b') of the uppermost container support (502a) and below apertures (503b') of any container support(s) (502b-j) arranged there between,
displacing the container supports (502) such that the target storage container (106') is in vertical alignment below the aperture (503b') of the uppermost container support (502a) and apertures (503b') of any container supports (502b-g) arranged between the container support (502h) supporting the target storage container (106') and the uppermost container support (502a),
C. lowering, grabbing and lifting the target storage container (106') by use of the lifting device (303,403) and
D. moving the container handling device (200,300,400) with the target storage container (106') to the second location.

18. The method in accordance with claim 17, wherein the automated storage and retrieval system (1) is in accordance with claim 5, and
wherein the method comprises the steps of
- moving the container handling device (200,300,400) with the target storage container (106') along the rail system (508) to the second location directly above the stack (107) and
- storing the target storage container (106') on top of the stack (107).

19. The method in accordance with claim 17 or 18, wherein step B involves equal displacements of the at least one container support (502a-g) arranged above the container support (502h) containing the target storage container (106').

## Patentansprüche

1. Automatisiertes Ein- und Auslagersystem (1), umfassend:
- Lagerbehälter (106);
- ein beleuchtbares Lagergitter (500), umfassend:
- horizontal verschiebbare Behälterträger (502; 502a-j), die jeweils mit einem vertikalen Versatz (ΔdV) zu einem benachbarten horizontal verschiebbaren Behälterträger (502; 502a-j) angeordnet sind und ausgelegt sind, eine Mehrzahl der Lagerbehälter (106) zu tragen,
- wobei mindestens einer der horizontal verschiebbaren Behälterträger (502) ein beleuchtbarer Behälterträger (502) ist, der ausgelegt ist, einen darunterliegenden Bereich zu beleuchten, und
- wobei der beleuchtbare Behälterträger (502) mindestens eine Öffnung (503a-f) aufweist, die ausgelegt ist, den Durchgang von mindestens einem der Lagerbehälter (106) hindurch zu ermöglichen,
- ein Trägerverschiebesystem (700) zum horizontalen Verschieben mindestens eines der Behälterträger (502); und
- eine Behälterhandhabungsvorrichtung (200, 300, 400), die ausgelegt ist, sich zu bewegen zwischen
- einer ersten Position oberhalb oder auf dem beleuchtbaren Lagergitter (500) und
- einer zweiten position außerhalb des horizontalen Umfangs des beleuchtbaren Lagergitters (500),
wobei die Behälterhandhabungsvorrichtung (200, 300, 400) eine Hubvorrichtung (304) umfasst, die ausgelegt ist, mindestens einen der Lagerbehälter (106) von einem der horizontal verschiebbaren Behälterträger (502; 502a-j) lösbar zu greifen und anzuheben.

2. Automatisiertes Ein- und Auslagersystem (1) nach Anspruch 1,
wobei das beleuchtbare Lagergitter (500) umfasst:
- ein Schienensystem (508), umfassend:
einen ersten Satz paralleler Schienen (510), die sich in einer ersten Richtung (X) erstrecken, und
einen zweiten Satz paralleler Schienen (511), die sich in einer zweiten Richtung (Y) erstrecken, die senkrecht zur ersten Richtung (X) ist,
wobei der erste und zweite Satz von Schienen (510, 511) ein Gittermuster mit benachbarten Gitterzellen (522) bilden, wobei jede Gitterzelle (522) eine Gitteröffnung (515) umfasst, die durch ein Paar benachbarter Schienen des ersten Satzes von Schienen (510) und ein Paar benachbarter Schienen des zweiten Satzes von Schienen (511) definiert ist, und
- wobei das Schienensystem (508) oberhalb und benachbart zum obersten horizontal verschiebbaren Behälterträger mit einem ersten vertikalen Versatz (Vᵣₗ) angeordnet ist, und
- wobei die Behälterhandhabungsvorrichtung (200, 300, 400) ausgelegt ist, sich horizontal in der ersten Richtung (X) und der zweiten Richtung (Y) auf dem Schienensystem (508) zu bewegen und den Lagerbehälter (106) durch die Gitteröffnung (515) unter Verwendung der Hubvorrichtung (303, 403) anzuheben.

3. Automatisiertes Ein- und Auslagersystem (1) nach Anspruch 2,
- wobei jeder Behälterträger (502) einzeln um eine Strecke verschiebbar ist, die der Strecke von n Gitterzellen (522) in der ersten (X) und/oder zweiten (Y) Richtung entspricht, wobei n eine ganze Zahl von 1 oder mehr ist.

4. Automatisiertes Ein- und Auslagersystem (1) nach einem der vorhergehenden Ansprüche, wobei das System (1) umfasst:
- einen Stapel (107) von Lagerbehältern (106), der außerhalb des horizontalen Umfangs des beleuchtbaren Lagergitters (500) angeordnet ist, und
- wobei die zweite Position oberhalb des Stapels (107) ist.

5. Automatisiertes Ein- und Auslagersystem (1) nach Anspruch 4, wenn abhängig von Anspruch 2 oder 3,
- wobei die Höhe des Stapels (107) geringer ist als die Höhe des Schienensystems (508) und
- wobei sich das Schienensystem (508) oberhalb des Stapels (107) erstreckt.

6. Automatisiertes Ein- und Auslagersystem (1) nach einem der vorhergehenden Ansprüche, wobei der mindestens eine beleuchtbare Behälterträger (502) umfasst:
- einen Behälterträgerrahmen (505, 506) und
- eine Mehrzahl von Beleuchtungseinheiten (550), die innerhalb des Behälterträgerrahmens (505, 506) getragen sind, auf denen jeweils ein Lagerbehälter (106) getragen werden kann,
- wobei jede Beleuchtungseinheit (550) eine Lichtquelle (552) umfasst.

7. Automatisiertes Ein- und Auslagersystem (1) nach Anspruch 6, wobei jede Beleuchtungseinheit (550) durch den Behälterträgerrahmen (505, 506) so getragen ist, dass sie durch die Behälterhandhabungsvorrichtung (200, 300, 400) entfernbar ist.

8. Automatisiertes Ein- und Auslagersystem (1) nach Anspruch 6 oder 7, wobei jede Beleuchtungseinheit (550) einen Beleuchtungseinheitsrahmen (553) umfasst, der eine Unterseite aufweist, an der die Lichtquelle (552) angeordnet ist.

9. Automatisiertes Ein- und Auslagersystem (1) nach einem der Ansprüche 6 bis 8, wobei jede Beleuchtungseinheit (550) eine greifbare Struktur (555) umfasst, die ausgelegt ist, eine lösbare Kopplung mit der Hubvorrichtung (304) zu ermöglichen.

10. Automatisiertes Ein- und Auslagersystem (1) nach einem der Ansprüche 6-9, wobei die Beleuchtungseinheit (550) einen Stromanschluss (554) umfasst, der ausgelegt ist, elektrische Energie von einer Beleuchtungsstromversorgung (551) zu empfangen und die empfangene Energie an die Lichtquelle (552) zu liefern.

11. Automatisiertes Ein- und Auslagersystem (1) nach einem der Ansprüche 6-10, wobei jeder horizontal verschiebbare Behälterträger (502)
Hauptrichtungen in einer ersten Richtung (X) und einer orthogonalen zweiten Richtung (Y) aufweist und
als Matrix von Behälterplätzen mit einer Mehrzahl von Behälterplätzen, die in der ersten Richtung (X) angeordnet sind, und einer Mehrzahl von Behälterplätzen, die in der zweiten Richtung (Y) angeordnet sind, ausgeführt ist, und
wobei eine Beleuchtungseinheit (550) in jedem Behälterplatz positioniert ist, um einen Lagerbehälter (106) zu tragen.

12. Automatisiertes Ein- und Auslagersystem (1) nach einem der vorhergehenden Ansprüche,
wobei jeder horizontal verschiebbare Behälterträger (502) eine Mehrzahl von Öffnungen (503a-f) aufweist, die ausgelegt sind, den Durchgang von mindestens einem der Lagerbehälter hindurch zu ermöglichen.

13. Automatisiertes Ein- und Auslagersystem (1) nach einem der vorhergehenden Ansprüche, wobei das Trägerverschiebesystem (700) umfasst:
einen Verschiebemechanismus (701), der eine Verschiebung eines oder mehrerer der Behälterträger (502) in mindestens einer Hauptrichtung (Y) ermöglicht, und
einen fernsteuerbaren Motor (702), der betriebsmäßig mit dem Verschiebemechanismus (701) gekoppelt ist.

14. Automatisiertes Ein- und Auslagersystem (1) nach einem der vorhergehenden Ansprüche, wobei das beleuchtbare Lagergitter (500) ein Belüftungssystem (800) umfasst, das ausgelegt ist, einen Luftstrom zwischen der Mehrzahl von Behälterträgern (502) zu führen.

15. Automatisiertes Ein- und Auslagersystem (1) nach Anspruch 14, wobei das Belüftungssystem (800) eine Mehrzahl von Belüftungsventilatoren umfasst, die zumindest teilweise innerhalb der vertikalen Versätze (ΔdV, Vᵣₗ) zwischen den Behälterträgern (502) angeordnet sind.

16. Automatisiertes Ein- und Auslagersystem (1) nach einem der vorhergehenden Ansprüche, wobei jeder Lagerbehälter (106) vertikale Seitenwände umfasst, die eine oder mehrere Öffnungen aufweisen.

17. Verfahren zum Ein- und Auslagern von Lagerbehältern (106) mit Erntegut (80) zur Kultivierung aus einem beleuchtbaren Lagergitter eines automatischen Ein- und Auslagersystems (1) nach einem der vorhergehenden Ansprüche,
wobei das Verfahren die folgenden Schritte umfasst:
A. Bewegen der Behälterhandhabungsvorrichtung (200,300,400) zur ersten Position, an der ihre Hubvorrichtung (303, 403) in vertikaler Ausrichtung entweder oberhalb eines Ziel-Lagerbehälters (106'), der auf dem obersten Behälterträger (502a) getragen ist, oder, falls sich der Ziel-Lagerbehälter (106') auf einem der unterhalb des obersten Behälterträgers (502a) angeordneten Behälterträger (502b-j) befindet, oberhalb einer Öffnung (503b') des obersten Behälterträgers (502), die sich horizontal am nächsten zum Ziel-Lagerbehälter (106') befindet, positioniert ist,
B. wenn der Ziel-Lagerbehälter (106') nicht in vertikaler Ausrichtung unterhalb der Öffnung (503b') des obersten Behälterträgers (502a) und unterhalb von Öffnungen (503b') etwaiger dazwischen angeordneter Behälterträger (502b-j) positioniert ist,
Verschieben der Behälterträger (502) derart, dass sich der Ziel-Lagerbehälter (106') in vertikaler Ausrichtung unterhalb der Öffnung (503b') des obersten Behälterträgers (502a) und der Öffnungen (503b') etwaiger zwischen dem den Ziel-Lagerbehälter (106') tragenden Behälterträger (502h) und dem obersten Behälterträger (502a) angeordneter Behälterträger (502b-g) befindet,
C. Absenken, Greifen und Anheben des Ziel-Lagerbehälters (106') unter Verwendung der Hubvorrichtung (303,403) und
D. Bewegen der Behälterhandhabungsvorrichtung (200, 300, 400) mit dem Ziel-Lagerbehälter (106') zur zweiten Position.

18. Verfahren nach Anspruch 17, wobei das automatisierte Ein- und Auslagersystem (1) nach Anspruch 5 ausgebildet ist, und
wobei das Verfahren die Schritte umfasst:
- Bewegen der Behälterhandhabungsvorrichtung (200, 300, 400) mit dem Ziel-Lagerbehälter (106') entlang des Schienensystems (508) zur zweiten Position direkt oberhalb des Stapels (107) und
- Stapeln des Ziel-Lagerbehälters (106') auf dem Stapel (107).

19. Verfahren nach Anspruch 17 oder 18, wobei Schritt B gleiche Verschiebungen des mindestens einen Behälterträgers (502a-g), der oberhalb des den Ziel-Lagerbehälter (106') enthaltenden Behälterträgers (502h) angeordnet ist, umfasst.

## Revendications

1. Système d'entreposage et de prélèvement automatisé (1) comprenant :
- des réceptacles d'entreposage (106) ;
- une grille d'entreposage éclairable (500) comprenant :
- des supports de réceptacles (502 ; 502a à j) déplaçables horizontalement, disposés chacun avec un décalage vertical (ΔdV) par rapport à un support de réceptacle (502 ; 502a à j) déplaçable horizontalement adjacent et
conçus pour supporter une pluralité des réceptacles d'entreposage (106),
- au moins l'un des supports de réceptacles (502) déplaçables horizontalement étant un support de réceptacle éclairable (502) qui est conçu pour éclairer une zone en dessous et
- le support de réceptacle éclairable (502) présentant au moins une ouverture (503a à f) conçue pour permettre le passage d'au moins l'un des réceptacles d'entreposage (106) à travers elle,
- un système de déplacement de support (700) pour déplacer horizontalement au moins un des supports de réceptacles (502) ; et
- un dispositif de manutention de réceptacle (200, 300, 400) conçu pour se déplacer entre
- un premier emplacement au-dessus de ou sur la grille d'entreposage éclairable (500) et
- un deuxième emplacement en dehors de la périphérie horizontale de la grille d'entreposage éclairable (500), dans lequel le dispositif de manutention de réceptacle (200, 300, 400) comprend un dispositif de levage (304) conçu pour saisir de manière libérable et soulever au moins un des réceptacles d'entreposage (106) à partir d'un des supports de réceptacles (502 ; 502a à j) déplaçables horizontalement.

2. Système d'entreposage et de prélèvement automatisé (1) selon la revendication 1,
dans lequel la grille d'entreposage éclairable (500) comprend
- un système de rails (508) comprenant un premier ensemble de rails parallèles (510) s'étendant dans une première direction (X) et
un second ensemble de rails parallèles (511) s'étendant dans une seconde direction (Y) perpendiculaire à la première direction (X),
les premier et second ensembles de rails (510, 511) formant un motif de grille comprenant des cellules de grille (522) adjacentes, dans lequel chaque cellule de grille (522) comprend une ouverture de grille (515) définie par une paire de rails adjacents du premier ensemble de rails (510) et une paire de rails adjacents du second ensemble de rails (511), et
- dans lequel le système de rails (508) est disposé au-dessus et à proximité du support de réceptacle déplaçable horizontalement le plus haut avec un premier décalage vertical (Vᵣₗ), et
- dans lequel le dispositif de manutention de réceptacle (200, 300, 400) est conçu pour se déplacer horizontalement dans la première direction (X) et la seconde direction (Y) sur le système de rails (508) et pour soulever le réceptacle d'entreposage (106) à travers l'ouverture de grille (515) en utilisant le dispositif de levage (303, 403).

3. Système d'entreposage et de prélèvement automatisé (1) selon la revendication 2,
- dans lequel chaque support de réceptacle (502) est déplaçable individuellement sur une distance correspondant à la distance de n cellules de grille (522) dans la première (X) et/ou la seconde (Y) direction, où n est un entier égal à 1 ou plus.

4. Système d'entreposage et de prélèvement automatisé (1) selon l'une quelconque des revendications précédentes, le système (1) comprenant
- un empilement (107) de réceptacles d'entreposage (106) situés en dehors de la périphérie horizontale de la grille d'entreposage éclairable (500), et
- dans lequel le deuxième emplacement est au-dessus de l'empilement (107).

5. Système d'entreposage et de prélèvement automatisé (1) selon la revendication 4, lorsqu'elle dépend de la revendication 2 ou 3,
- dans lequel la hauteur de l'empilement (107) est inférieure à la hauteur du système de rails (508) et
- dans lequel le système de rails (508) s'étend au-dessus de l'empilement (107).

6. Système d'entreposage et de prélèvement automatisé (1) selon l'une quelconque des revendications précédentes, dans lequel l'au moins un support de réceptacle éclairable (502) comprend
- un cadre de support de réceptacle (505, 506) et
- une pluralité d'unités d'éclairage (550) supportées à l'intérieur du cadre de support de réceptacle (505, 506), sur chacune desquelles peut être supporté un réceptacle d'entreposage (106),
- dans lequel chaque unité d'éclairage (550) comprend une source d'éclairage (552).

7. Système d'entreposage et de prélèvement automatisé (1) selon la revendication 6, dans lequel chaque unité d'éclairage (550) est supportée par le cadre de support de réceptacle (505, 506) de manière à être enlevée par le dispositif de manutention de réceptacle (200, 300, 400).

8. Système d'entreposage et de prélèvement automatisé (1) selon la revendication 6 ou 7, dans lequel chaque unité d'éclairage (550) comprend un cadre d'unité d'éclairage (553) ayant une face inférieure sur laquelle la source d'éclairage (552) est disposée.

9. Système d'entreposage et de prélèvement automatisé (1) selon l'une quelconque des revendications 6 à 8, dans lequel chaque unité d'éclairage (550) comprend une structure saisissable (555) conçue pour permettre un accouplement libérable avec le dispositif de levage (304).

10. Système d'entreposage et de prélèvement automatisé (1) selon l'une quelconque des revendications 6 à 9, dans lequel l'unité d'éclairage (550) comprend un connecteur d'alimentation (554) conçu pour recevoir de l'énergie provenant d'une alimentation d'éclairage (551) et pour fournir l'énergie reçue à la source d'éclairage (552).

11. Système d'entreposage et de prélèvement automatisé (1) selon l'une quelconque des revendications 6 à 10, dans lequel chaque support de réceptacle (502) déplaçable horizontalement
a des directions principales dans une première direction (X) et une seconde direction (Y) orthogonale et
est conçu comme une matrice d'espaces pour réceptacles comportant une pluralité d'espaces pour réceptacles disposés dans la première direction (X) et une pluralité d'espaces pour réceptacles disposés dans la seconde direction (Y), et
dans lequel une unité d'éclairage (550) est positionnée dans chaque espace pour réceptacle pour supporter un réceptacle d'entreposage (106).

12. Système d'entreposage et de prélèvement automatisé (1) selon l'une quelconque des revendications précédentes,
dans lequel chaque support de réceptacle (502) déplaçable horizontalement présente une pluralité d'ouvertures (503a à f) conçues pour permettre le passage d'au moins un des réceptacles d'entreposage à travers elles.

13. Système d'entreposage et de prélèvement automatisé (1) selon l'une quelconque des revendications précédentes, dans lequel le système de déplacement de support (700) comprend
un mécanisme de déplacement (701) permettant le déplacement d'un ou de plusieurs des supports de réceptacles (502) dans au moins une direction principale (Y) et
un moteur télécommandé (702) accouplé de manière fonctionnelle au mécanisme de déplacement (701).

14. Système d'entreposage et de prélèvement automatisé (1) selon l'une quelconque des revendications précédentes, dans lequel la grille d'entreposage éclairable (500) comprend un système de ventilation (800) pour guider un écoulement d'air entre la pluralité de supports de réceptacles (502).

15. Système d'entreposage et de prélèvement automatisé (1) selon la revendication 14, dans lequel le système de ventilation (800) comprend une pluralité de ventilateurs disposés au moins partiellement dans les décalages verticaux (ΔdV, Vᵣₗ) entre les supports de réceptacles (502).

16. Système d'entreposage et de prélèvement automatisé (1) selon l'une quelconque des revendications précédentes, dans lequel chaque réceptacle d'entreposage (106) comprend des parois latérales verticales présentant un ou plusieurs orifices.

17. Procédé d'entreposage et de prélèvement de réceptacles d'entreposage (106) avec des cultures (80) à cultiver à partir d'une grille d'entreposage éclairable d'un système d'entreposage et de prélèvement automatisé (1) selon l'une quelconque des revendications précédentes,
le procédé comprenant les étapes suivantes :
A. déplacer le dispositif de manutention de réceptacle (200, 300, 400) jusqu'au premier emplacement où son dispositif de levage (303, 403) est positionné en alignement vertical au-dessus soit d'un réceptacle d'entreposage cible (106') supporté sur le support de réceptacle le plus haut (502a), soit, si le réceptacle d'entreposage cible (106') est situé sur l'un des supports de réceptacles (502b à j) en dessous du support de réceptacle le plus haut (502a), d'une ouverture (503b') du support de réceptacle le plus haut (502) situé horizontalement le plus près du réceptacle d'entreposage cible (106'),
B. si le réceptacle d'entreposage cible (106') n'est pas positionné en alignement vertical en dessous de l'ouverture (503b') du support de réceptacle le plus haut (502a) et en dessous des ouvertures (503b') d'un ou de plusieurs supports de réceptacles (502b à j) éventuels disposés entre,
déplacer les supports de réceptacles (502) de sorte que le réceptacle d'entreposage cible (106') soit en alignement vertical en dessous de l'ouverture (503b') du support de réceptacle le plus haut (502a) et des ouvertures (503b') de supports de réceptacles (502b à g) éventuels disposés entre le support de réceptacle (502h) supportant le réceptacle d'entreposage cible (106') et le support de réceptacle le plus haut (502a),
C. abaisser, saisir et soulever le réceptacle d'entreposage cible (106') à l'aide du dispositif de levage (303, 403), et
D. déplacer le dispositif de manutention de réceptacle (200, 300, 400) avec le réceptacle d'entreposage cible (106') jusqu'au deuxième emplacement.

18. Procédé selon la revendication 17, dans lequel le système d'entreposage et de prélèvement automatisé (1) est conforme à la revendication 5, et
le procédé comprenant les étapes suivantes :
- déplacer le dispositif de manutention de réceptacle (200, 300, 400) avec le réceptacle d'entreposage cible (106') le long du système de rails (508) jusqu'au deuxième emplacement directement au-dessus de l'empilement (107) et
- entreposer le réceptacle d'entreposage cible (106') au-dessus de l'empilement (107).

19. Procédé selon la revendication 17 ou 18, dans lequel l'étape B implique des déplacements égaux de l'au moins un support de réceptacle (502a à g) disposé au-dessus du support de réceptacle (502h) contenant le réceptacle d'entreposage cible (106').
